# EUROPEAN PATENT APPLICATION

(11) **EP 4 530 931 A1**
(43) Date of publication of application: **02.04.2025**
(21) Application number: 24193017.1
(22) Date of filing: 06.08.2024
(51) Int. Cl.: G06N 3/09, G06N 3/048, G06N 3/0455, G06N 3/0464

(54) **REAL-TIME INFERENCE OF TEMPORAL DOWN-SAMPLING CONVOLUTIONAL NETWORKS**

(30) Priority: 26.09.2023 US 202318474564
(71) Applicant: Intel Corporation, Santa Clara, CA 95054 (US)
(72) Inventor: Pindor, Lukasz, 83-000 Pruszcz (PL); Kupryjanow, Adam, 80-298 Gdansk (PL)
(74) Representative: Goddar, Heinz J.

(57) **Abstract**

Low latency neural network models are provided that can be used for speech processing. The neural networks allow for real-time inference of CNN models without an increase in computer complexity or memory footprint. Buffers are used for upsampling, and the depth of the convolutions varies by frame number. In some examples, a condition is applied within the convolution block to determine a depth of convolutions based on the frame number. In some examples, the network includes multiple convolution sub-model blocks, each having a different depth, and a table is used to select the convolution sub-model block for each frame based on the frame number. The neural networks can be used for speech enhancement tasks such as dynamic noise suppression (DNS), blind source separation (BSS), and Self-Noise Silencers (SNS).

## Description

### Technical Field

This disclosure relates generally to convolutional neural networks (CNNs), and more specifically, inference of CNNs with temporal down-sampling.

### Background

The last decade has witnessed a rapid rise in Al (artificial intelligence) based data processing, particularly based on CNNs. CNNs are widely used in the domains of computer vision, speech recognition, image, and video processing mainly due to their ability to achieve beyond human-level accuracy. The significant improvements in CNN model size and accuracy coupled with the rapid increase in computing power of execution platforms have led to the adoption of CNN applications even within resource constrained mobile and edge devices that have limited energy availability. Additionally, CNNs are used for speech enhancement tasks such as dynamic noise suppression (DNS), blind source separation (BSS), and Self-Noise Silencers (SNS).

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates an example CNN, in accordance with various embodiments.
FIG. 2A is a block diagram of a CNN system, in accordance with various embodiments.
FIG. 2B is a block diagram of a CNN module, in accordance with various embodiments.
FIG. 2C illustrates a local memory, in accordance with various embodiments.
FIG. 3 illustrates a convolution network to which the systems and methods provided herein can be applied, in accordance with various embodiments.
FIG. 4 illustrates a U-Convolution Block (U-ConvBlock) which can be included in a convolution network, in accordance with various embodiments.
FIG. 5A illustrates another U-ConvBlock which can be included in a convolution network, in accordance with various embodiments.
FIGS. 5B-5D illustrate conditional execution of the U-ConvBlock in FIG. 5A in accordance with various embodiments.
FIGS. 6A-6E illustrate U-ConvBlocks of various depths in accordance with various embodiments.
FIG. 7 illustrates an example processing element (PE) array, in accordance with various embodiments.
FIG. 8 is a block diagram of a PE, in accordance with various embodiments.
FIG. 9 is a flowchart showing a method of performing convolution operations, in accordance with various embodiments.
FIG. 10 is a block diagram of an example computing device, in accordance with various embodiments.

### Detailed Description

### Overview

CNNs are used extensively for a variety of artificial intelligence applications including speech processing and speech enhancing tasks. However, when CNNs perform convolutions with a stride greater than one in the time dimension, the convolutions involve larger context. The larger context, in real-time (causal) applications, introduces latency that prevents real-time processing. In particular, CNNs that perform down-sampling in the time domain use more than one frame to calculate an output, resulting in the latency. Systems and methods are needed for improved low latency speech enhancing networks.

A CNN usually includes convolutional layers. A convolution layer includes one or more convolutions. A convolution is typically performed on one or more internal parameters of the CNN layer (e.g., weights), which are determined during the training phase, and one or more activations. An activation may be a data point (also referred to as "data elements" or "elements"). Activations or weights of a CNN layer may be elements of a tensor of the CNN layer. A tensor is a data structure having multiple elements across one or more dimensions. Example tensors include a vector, which is a one-dimensional tensor, and a matrix, which is a two dimensional tensor. There can also be three-dimensional tensors and even higher dimensional tensors. A CNN layer may have an input tensor (also referred to as "input feature map (IFM)") including one or more input activations (also referred to as "input elements") and a weight tensor including one or more weights. A weight is an element in the weight tensor. A weight tensor of a convolution may be a kernel, a filter, or a group of filters. The output data of the CNN layer may be an output tensor (also referred to as "output feature map (OFM)") that includes one or more output activations (also referred to as "output elements").

Speech is a one-dimensional signal, where time dependencies are an important component for achieving high accuracy processing. In some examples, time is represented by a *UV-dimension* in tensors consumed by a CNN. In some neural networks, analysis of time dependencies is done using a time convolution network (TCN) architecture, where hidden states of the network use dilated convolutions executed over the *UV-dimension.* In some examples, a Deep Complex Convolutional Recurrent Network (DCCRN) model handles time dependencies using stacked two-dimensional (2D) convolutions with a stride equal to one in the *UV-dimension.* However, when the stride is greater than one, these networks are unable to perform real-time processing or enhancement tasks without introducing latency.

Previous efforts for real-time processing include a neural network in which inference is preformed using batching. In a first method, inference is performed using a batching technique. In particular, the input length to the network is selected to cover model context (typically hundreds of milliseconds). After the inference step, full or partial output is returned as a processed signal. In a second method, hybrid batching is used, such that instead of outputting the newest part of the buffer, the middle part of the buffer is output. However, both of these methods introduce significant latency as well as quality degradation. Furthermore, there are significant memory costs to these batching solutions, which use long input and output buffers to perform batching.

Systems and methods are provided herein for CNN models with a stride in convolutional layers over the W-dimension that is one. The systems and methods allow for high quality signal processing using real-time and low latency inference of CNN models without an increase in computer complexity or memory footprint. The systems and methods use buffers for upsampling. In various examples, the input can include multiple frames, where a frame is one input unit such as input audio data at a selected time, a still image (of a video stream), or other cross-section of the input data. In one example, an input audio signal is converted into multiple audio frames by processing the audio signal (e.g., 100 frames per second). In one example, an audio frame includes a frequency spectrum including amplitudes at each frequency. According to various examples, the depth of the convolutions varies by frame number. As described in greater detail below, the convolution depth for each frame is recorded in a table, and, for each frame, the table is referenced to determine convolution depth. In some examples, a condition is applied within the convolution block to determine a depth of convolutions implemented. In some examples, the network includes multiple convolution blocks, each having a different depth, and the table is used to select the convolution block for each frame based on the frame number.

Systems and methods are provided herein for performing an inference operation using buffers for upsampling. The neural network includes convolution sub-model blocks having different depths, a depth of a convolution sub-model block indicating a numbers of convolution layers in the convolution sub-model block. The method includes determining a frame number for an input tensor to a neural network and selecting a convolution sub-model block based on the frame number. The inference operation is performed using the selected convolution sub-model block by performing a first convolution operation in the first convolution layer with data from a first buffer, writing data generated by a second convolution operation in the second convolution layer into a second buffer, and writing output from the second convolution layer into a third buffer.

For purposes of explanation, specific numbers, materials and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, device, or CNN accelerator that comprises a list of elements is not necessarily limited to only those elements but may include other elements not expressly listed or inherent to such method, process, device, or CNN accelerators. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description below and the accompanying drawings.

### Example CNN

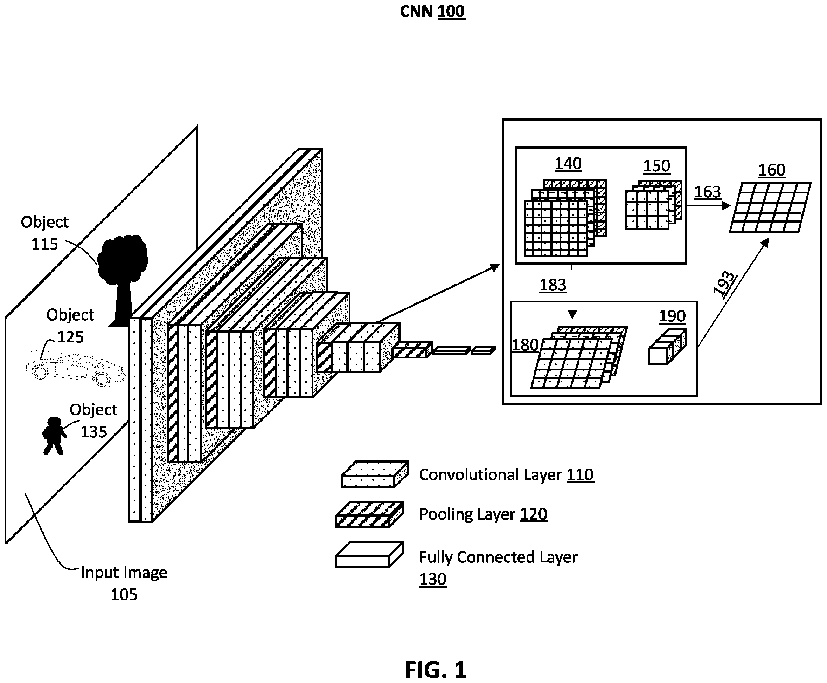

FIG. 1 illustrates an example CNN 100, in accordance with various embodiments. The CNN 100 is trained to receive images and output classifications of objects in the images. In the embodiments of FIG. 1, the CNN 100 receives an input image 105 that includes objects 115, 125, and 135. The CNN 100 includes a sequence of layers comprising a plurality of convolutional layers 110 (individually referred to as "convolutional layer 110"), a plurality of pooling layers 120 (individually referred to as "pooling layer 120"), and a plurality of fully connected layers 130 (individually referred to as "fully connected layer 130"). In other embodiments, the CNN 100 may include fewer, more, or different layers. In an inference of the CNN 100, the layers of the CNN 100 execute tensor computation that includes many tensor operations, such as convolution (e.g., multiply-accumulate (MAC) operations, etc.), pooling operations, elementwise operations (e.g., elementwise addition, elementwise multiplication, etc.), other types of tensor operations, or some combination thereof.

The convolutional layers 110 summarize the presence of features in the input image 105. The convolutional layers 110 function as feature extractors. The first layer of the CNN 100 is a convolutional layer 110. In an example, a convolutional layer 110 performs a convolution on an input tensor 140 (also referred to as IFM 140) and a filter 150. As shown in FIG. 1, the IFM 140 is represented by a 7×7×3 three-dimensional (3D) matrix. The IFM 140 includes 3 input channels, each of which is represented by a 7×7 two dimensional (2D) matrix. The 7×7 2D matrix includes 7 input elements (also referred to as input points) in each row and seven input elements in each column. The filter 150 is represented by a 3×3×3 3D matrix. The filter 150 includes 3 kernels, each of which may correspond to a different input channel of the IFM 140. A kernel is a 2D matrix of weights, where the weights are arranged in columns and rows. A kernel can be smaller than the IFM. In the embodiments of FIG. 1, each kernel is represented by a 3×3 2D matrix. The 3×3 kernel includes 3 weights in each row and three weights in each column. Weights can be initialized and updated by backpropagation using gradient descent. The magnitudes of the weights can indicate importance of the filter 150 in extracting features from the IFM 140.

The convolution includes MAC operations with the input elements in the IFM 140 and the weights in the filter 150. The convolution may be a standard convolution 163 or a depthwise convolution 183. In the standard convolution 163, the whole filter 150 slides across the IFM 140. All the input channels are combined to produce an output tensor 160 (also referred to as output feature map (OFM) 160). The OFM 160 is represented by a 5×5 2D matrix. The 5×5 2D matrix includes 5 output elements (also referred to as output points) in each row and five output elements in each column. For purpose of illustration, the standard convolution includes one filter in the embodiments of FIG. 1. In embodiments where there are multiple filters, the standard convolution may produce multiple output channels in the OFM 160.

The multiplication applied between a kernel-sized patch of the IFM 140 and a kernel may be a dot product. A dot product is the elementwise multiplication between the kernel-sized patch of the IFM 140 and the corresponding kernel, which is then summed, always resulting in a single value. Because it results in a single value, the operation is often referred to as the "scalar product." Using a kernel smaller than the IFM 140 is intentional as it allows the same kernel (set of weights) to be multiplied by the IFM 140 multiple times at different points on the IFM 140. Specifically, the kernel is applied systematically to each overlapping part or kernel-sized patch of the IFM 140, left to right, top to bottom. The result from multiplying the kernel with the IFM 140 one time is a single value. As the kernel is applied multiple times to the IFM 140, the multiplication result is a 2D matrix of output elements. As such, the 2D output matrix (i.e., the OFM 160) from the standard convolution 163 is referred to as an OFM.

In the depthwise convolution 183, the input channels are not combined. Rather, MAC operations are performed on an individual input channel and an individual kernel and produce an output channel. As shown in FIG. 1, the depthwise convolution 183 produces a depthwise output tensor 180. The depthwise output tensor 180 is represented by a 5×5×3 3D matrix. The depthwise output tensor 180 includes 3 output channels, each of which is represented by a 5×5 2D matrix. The 5×5 2D matrix includes 5 output elements in each row and five output elements in each column. Each output channel is a result of MAC operations of an input channel of the IFM 140 and a kernel of the filter 150. For instance, the first output channel (patterned with dots) is a result of MAC operations of the first input channel (patterned with dots) and the first kernel (patterned with dots), the second output channel (patterned with horizontal strips) is a result of MAC operations of the second input channel (patterned with horizontal strips) and the second kernel (patterned with horizontal strips), and the third output channel (patterned with diagonal stripes) is a result of MAC operations of the third input channel (patterned with diagonal stripes) and the third kernel (patterned with diagonal stripes). In such a depthwise convolution, the number of input channels equals the number of output channels, and each output channel corresponds to a different input channel. The input channels and output channels are referred to collectively as depthwise channels. After the depthwise convolution, a pointwise convolution 193 is then performed on the depthwise output tensor 180 and a 1×1×3 tensor 190 to produce the OFM 160.

The OFM 160 is then passed to the next layer in the sequence. In some embodiments, the OFM 160 is passed through an activation function. An example activation function is the rectified linear activation function (ReLU). ReLU is a calculation that returns the value provided as input directly, or the value zero if the input is zero or less. The convolutional layer 110 may receive several images as input and calculate the convolution of each of them with each of the kernels. This process can be repeated several times. For instance, the OFM 160 is passed to the subsequent convolutional layer 110 (i.e., the convolutional layer 110 following the convolutional layer 110 generating the OFM 160 in the sequence). The subsequent convolutional layers 110 perform a convolution on the OFM 160 with new kernels and generates a new feature map. The new feature map may also be normalized and resized. The new feature map can be kernelled again by a further subsequent convolutional layer 110, and so on.

In some embodiments, a convolutional layer 110 has four hyperparameters: the number of kernels, the size F kernels (e.g., a kernel is of dimensions F×F×D pixels), the S step with which the window corresponding to the kernel is dragged on the image (e.g., a step of one means moving the window one pixel at a time), and the zero-padding P (e.g., adding a black contour of P pixels thickness to the input image of the convolutional layer 110). The convolutional layers 110 may perform various types of convolutions, such as 2-dimensional convolution, dilated or atrous convolution, spatial separable convolution, depthwise separable convolution, transposed convolution, and so on. The CNN 100 includes 16 convolutional layers 110. In other embodiments, the CNN 100 may include a different number of convolutional layers.

The pooling layers 120 down-sample feature maps generated by the convolutional layers, e.g., by summarizing the presence of features in the patches of the feature maps. A pooling layer 120 is placed between two convolution layers 110: a preceding convolutional layer 110 (the convolution layer 110 preceding the pooling layer 120 in the sequence of layers) and a subsequent convolutional layer 110 (the convolution layer 110 subsequent to the pooling layer 120 in the sequence of layers). In some embodiments, a pooling layer 120 is added after a convolutional layer 110, e.g., after an activation function (e.g., ReLU, etc.) has been applied to the OFM 160.

A pooling layer 120 receives feature maps generated by the preceding convolution layer 110 and applies a pooling operation to the feature maps. The pooling operation reduces the size of the feature maps while preserving their important characteristics. Accordingly, the pooling operation improves the efficiency of the CNN and avoids over-learning. The pooling layers 120 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is 2×2 pixels applied with a stride of two pixels, so that the pooling operation reduces the size of a feature map by a factor of 2, e.g., the number of pixels or values in the feature map is reduced to one quarter the size. In an example, a pooling layer 120 applied to a feature map of 6×6 results in an output pooled feature map of 3×3. The output of the pooling layer 120 is inputted into the subsequent convolution layer 110 for further feature extraction. In some embodiments, the pooling layer 120 operates upon each feature map separately to create a new set of the same number of pooled feature maps.

The fully connected layers 130 are the last layers of the CNN. The fully connected layers 130 may be convolutional or not. The fully connected layers 130 receive an input operand. The input operand defines the output of the convolutional layers 110 and pooling layers 120 and includes the values of the last feature map generated by the last pooling layer 120 in the sequence. The fully connected layers 130 apply a linear combination and an activation function to the input operand and generate a vector. The vector may contain as many elements as there are classes: element i represents the probability that the image belongs to class i. Each element is therefore between 0 and 1, and the sum of all is worth one. These probabilities are calculated by the last fully connected layer 130 by using a logistic function (binary classification) or a softmax function (multi-class classification) as an activation function.

In some embodiments, the fully connected layers 130 classify the input image 105 and return an operand of size N, where N is the number of classes in the image classification problem. In the embodiments of FIG. 1, N equals 3, as there are three objects 115, 125, and 135 in the input image. Each element of the operand indicates the probability for the input image 105 to belong to a class. To calculate the probabilities, the fully connected layers 130 multiply each input element by weight, make the sum, and then apply an activation function (e.g., logistic if N=2, softmax if N>2). This is equivalent to multiplying the input operand by the matrix containing the weights. In an example, the vector includes 3 probabilities: a first probability indicating the object 115 being a tree, a second probability indicating the object 125 being a car, and a third probability indicating the object 135 being a person. In other embodiments where the input image 105 includes different objects or a different number of objects, the individual values can be different.

### Example CNN System

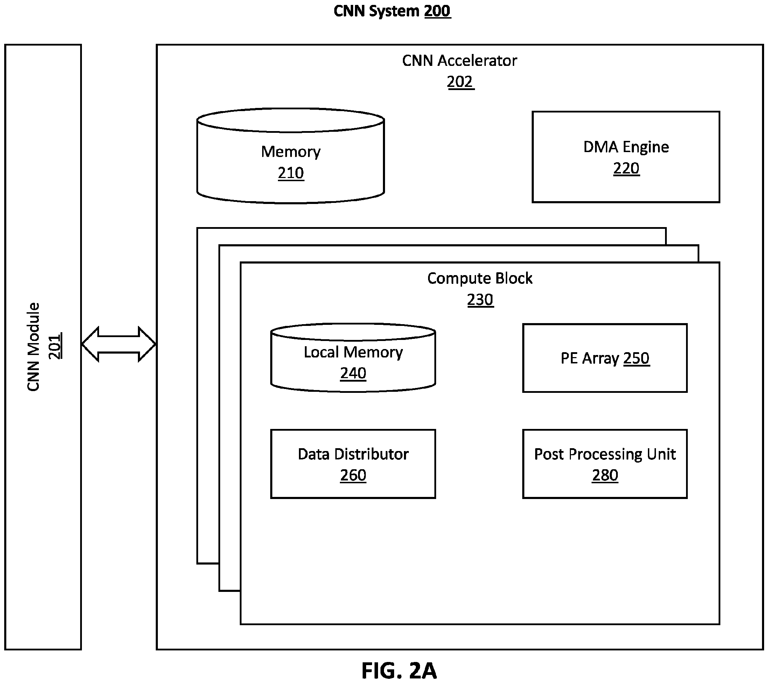

FIG. 2A is a block diagram of a CNN system 200, in accordance with various embodiments. The whole CNN system 200 or a part of the CNN system 200 may be implemented in one or more computing devices, such as the computing device 1200 in FIG. 12. The CNN system 200 can generate and execute CNNs, such as the CNN 100 in FIG. 1. As shown in FIG. 2A, the CNN system 200 includes a CNN module 201 and a CNN accelerator 202. In other embodiments, alternative configurations, different or additional components may be included in the CNN system 200. For instance, the CNN system 200 may include multiple CNN modules or multiple CNN accelerators. Further, functionality attributed to a component of the CNN system 200 may be accomplished by a different component included in the CNN system 200 or a different system. In some embodiments, the CNN module 201 and CNN accelerator 202 may include different types of processing units. The CNN module 201 and CNN accelerator 202 may be implemented in the same chip or separate chips.

The CNN module 201 facilitates generation and application of CNNs. In some embodiments, the CNN module 201 may generate and train CNNs. For instance, the CNN module 201 can define the layered architecture of a CNN. The CNN module 201 can also determine the internal parameters (e.g., weights) of the CNN through a CNN training process. The CNN module 201 may also determine one or more hyperparameters that define how the CNN is trained or how one or more deep learning operations in the CNN are to be performed. For instance, hyperparameters may indicate how convolutions or convolutions variants in the CNN are to be performed. Examples of the hyperparameters may include padding size, stride size, kernel size, dilation rate, and so on.

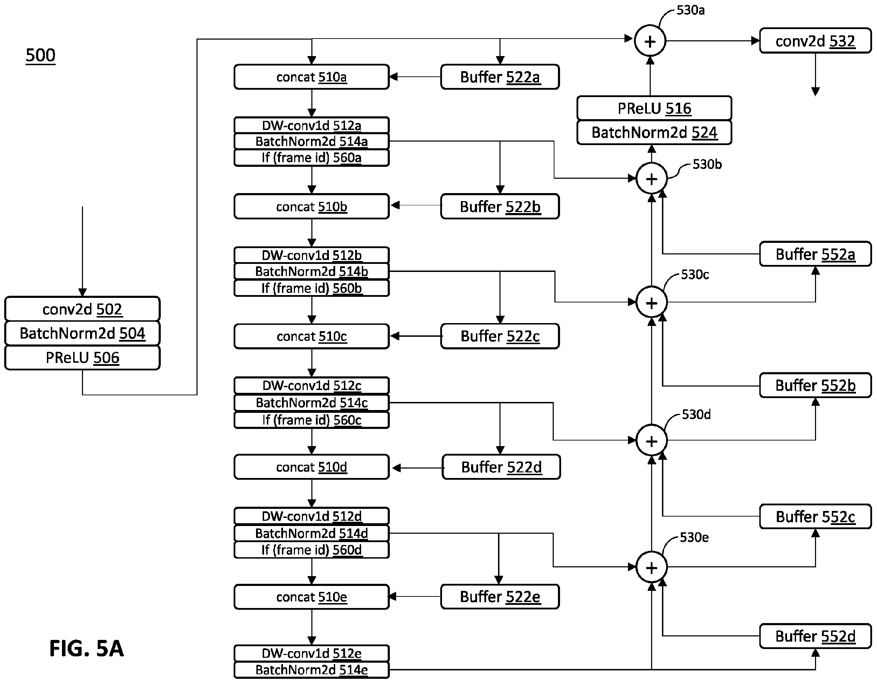

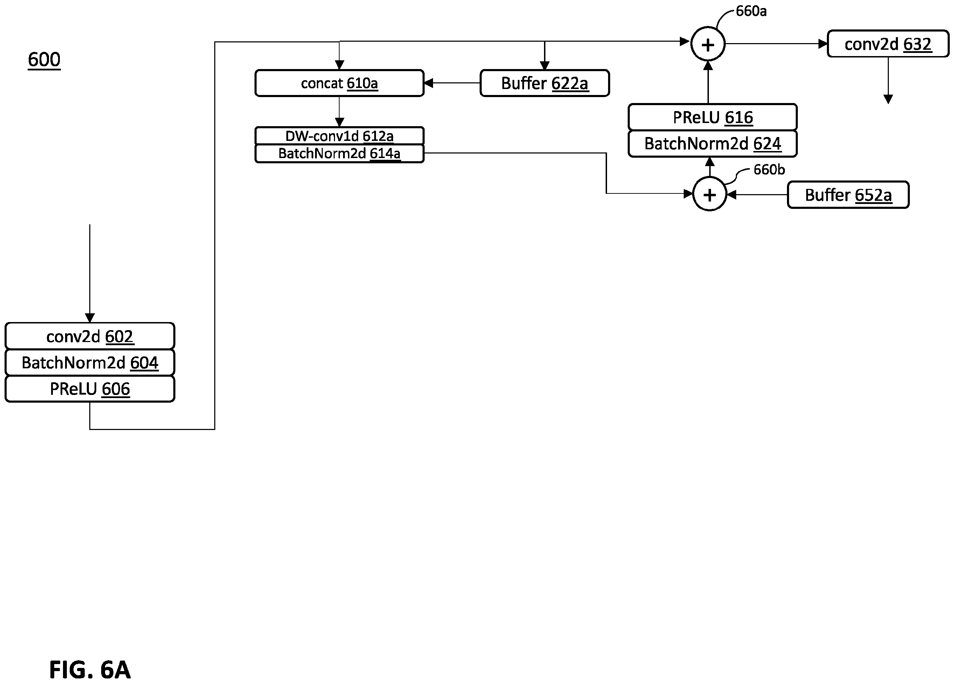

The CNN module 201 may further deploy trained or validated CNNs for use in deep learning applications. In some embodiments, the CNN module 201 may distribute trained or validated CNNs to devices or systems which may use the CNNs to perform tasks (e.g., speech enhancement, image classification, motion planning, etc.) for which the CNNs were trained. In other embodiments, the CNN module 201 may facilitate deployment of the CNNs using the CNN accelerator 202. For instance, the CNN module 201 may receive data from a device or system coupled with the CNN system 200 and input the received data (or data generated by the CNN module 201, e.g., based on the received data) into a CNN. The CNN module 201 may generate instructions (e.g., configuration files) that control the operation of the CNN accelerator 202 during the CNN inference. The CNN module 201 may receive an output of the CNN from the CNN accelerator 202. The CNN module 201 may transmit the output of the CNN (or a result of processing the output of the CNN by the CNN module 201) to the device or system. Certain aspects of the CNN module 201 are provided below in conjunction with FIGS. 5A and 6A-6E.

The CNN accelerator 202 executes CNNs provided by the CNN module 201. For instance, the CNN accelerator 202 can perform CNN inference, e.g., by running deep learning operations in the CNNs, for training CNNs or for using the trained or validated CNNs to perform tasks. As shown in FIG. 2A, the CNN accelerator 202 includes a memory 210, a direct memory access (DMA) engine 220, and compute block 230 (individually referred to as "compute block 230"). In other embodiments, alternative configurations, different or additional components may be included in the CNN accelerator 202. For example, the CNN accelerator 202 may include more than one memory 210 or DMA engine 220. As another example, the CNN accelerator 202 may include a single compute block 230. Further, functionality attributed to a component of the CNN accelerator 202 may be accomplished by a different component included in the CNN accelerator 202 or by a different system. A component of the CNN accelerator 202 may be implemented in hardware, software, firmware, or some combination thereof.

The memory 210 stores data associated with deep learning operations (including activation functions) performed by the CNN accelerator. In some embodiments, the memory 210 may store data to be used by the compute blocks 230 for CNN inference. For example, the memory 210 may store data computed by the precompute module 205, such as coefficients of Taylor series. As another example, the memory 210 may store weights, such as weights of convolutional layers, which are determined by training CNNs. The memory 210 may also store data generated by the compute blocks 230 from performing deep learning operations in CNNs. Example deep learning operations include convolutions (also referred to as "convolutional operations"), pooling operations, elementwise operations, activation functions, other types of deep learning operations, or some combination thereof. The memory 210 may be a main memory of the CNN accelerator 202. In some embodiments, the memory 210 includes one or more DRAMs (dynamic random-access memory).

The DMA engine 220 facilitates data transfer between the memory 210 and local memories of the compute blocks 230. For example, the DMA engine 220 can read data from the memory 210 and write data into a local memory of a compute block 230. As another example, the DMA engine 220 can read data from a local memory of a compute block 230and write data into the memory 210. The DMA engine 220 provides a DMA feature that allows the compute block 230 to initiate data transfer between the memory 210 and the local memories of the compute blocks 230 and to perform other operations while the data transfer is in being conducted. In some embodiments, the DMA engine 220 may read tensors from the memory 210, modify the tensors in a way that is optimized for the compute block 230 before it writes the tensors into the local memories of the compute blocks 230.

The compute blocks 230 can perform deep learning operations in CNNs, including convolutions, upsampling operations, and so on. For instance, a compute block 230 may run a deep learning operation in a CNN layer, or a portion of the deep learning operation, at a time. The compute blocks 230 may be capable of running various types of deep learning operations, such as convolution, pooling, elementwise operation, linear operation, nonlinear operation, and so on. In an example, a compute block 230 may perform convolutions, e.g., regular convolution or depthwise convolution. In some embodiments, the compute block 230 receives an input tensor and one or more convolutional kernels and performs a convolution with the input tensor and convolutional kernels. The result of the convolution may be an output tensor, which can be further computed, e.g., by the compute block 230 or another compute block 230. In some embodiments, the operations of the CNN layers may be run by multiple compute blocks 230 in parallel. For instance, multiple compute blocks 230 may each perform a portion of a workload for a convolution. Data may be shared between the compute blocks 230. A compute block 230 may also be referred to as a compute tile. In some embodiments, each compute block 230 may be a processing unit.

In the embodiments of FIG. 2A, each compute block 230 includes a local memory 240, a PE array 250, a data distributor 260, and a post processing unit 280. Some or all the components of the compute block 230 can be implemented on the same chip. In other embodiments, alternative configurations, different or additional components may be included in the compute block 230. Further, functionality attributed to a component of the compute block 230 may be accomplished by a different component included in the compute block 230, a different compute block 230, another component of the CNN accelerator 202, or a different system. A component of the compute block 230 may be implemented in hardware, software, firmware, or some combination thereof.

The local memory 240 is local to the corresponding compute block 230. In the embodiments of FIG. 2A, the local memory 240 is inside the compute block 230. In other embodiments, the local memory 240 may be outside the compute block 230. The local memory 240 may store data received, used, orgenerated by the PE array 250 and the post processing unit 280. Examples of the data may include input activations, weights, output activations, coefficients of Taylor series, results of activation functions, sparsity bitmaps, and so on. Data in the local memory 240 may be transferred to or from the memory 210, e.g., through the DMA engine 220. In some embodiments, data in the local memory 240 may be transferred to or from the local memory of another compute block 230.

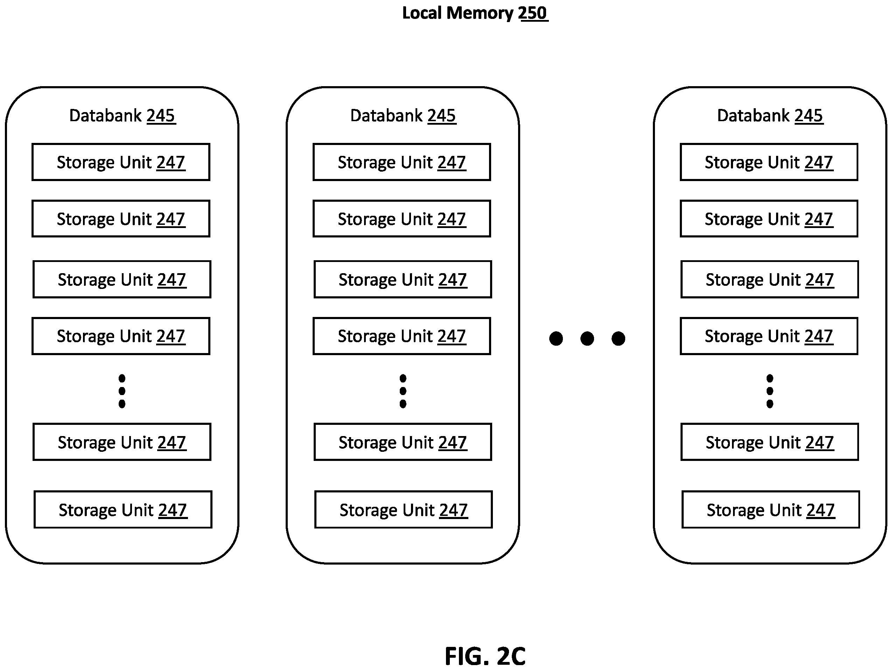

In some embodiments, the local memory 240 is one or more static random-access memories (SRAMs). The local memory 240 may be byte-addressable, and each memory address identifies a single byte (eight bits) of storage. In some embodiments, the local memory 240 may include databanks. The number of databanks in the local memory 240 may be 16, 64, 128, 256, 512, 1024, 2048, or other numbers. A databank may include a plurality of storage units. In an example, a databank may include 8, 16, 64, or a different number of storage units. A databank or a storage unit may have one or more memory addresses. In an example, a storage unit may store a single byte, and data larger than a single byte may be stored in storage units with consecutive memory addresses, i.e., adjacent storage units. For instance, a storage unit can store an integer number in the INT8 format, versus two storage units may be needed to store a number in the FP16 or BF16 format, which has 16 bits. In some embodiments, 16 bits can be transferred from the local memory 240 in a single read cycle. In other embodiments, 16 bits can be transferred from the local memory 240 in multiple read cycles, such as two cycles. Certain aspects the local memory 240 are described below in conjunction with FIG. 2C.

The PE array 250 may include PEs arranged in columns, or columns and rows. Each PE can perform MAC operations. In some embodiments, a PE includes one or more multipliers for performing multiplications. An PE may also include one or more accumulators ("adders") for performing accumulations. A column of PEs is referred to as a PE column. A PE column may be associated with one or more MAC lanes. A MAC lane is a path for loading data into a MAC column. A MAC lane may be also referred to as a data transmission lane or data loading lane. A PE column may have multiple MAC lanes. The loading bandwidth of the MAC column is an aggregation of the loading bandwidths of all the MAC lanes associated with the MAC column. With a certain number of MAC lanes, data can be fed into the same number of independent PEs simultaneously. In some embodiments where a MAC column has four MAC lanes for feeding activations or weights into the MAC column and each MAC lane may have a bandwidth of 16 bytes, the four MAC lanes can have a total loading bandwidth of 64 bytes.

In some embodiments, the PE array 250 may be capable of depthwise convolution, standard convolution, or both. In a depthwise convolution, a PE may perform an MAC operation that includes a sequence of multiplications for an input operand and a weight operand. Each multiplication in the sequence (also referred to as a cycle) is a multiplication of a different activation in the input operand with a different weight in the weight operand. The activation and weight in the same cycle may correspond to the same channel. The sequence of multiplication produces a product operand that includes a sequence of products. The MAC operation may also include accumulations in which multiple product operands are accumulated to produce an output operand of the PE. The PE array 250 may output multiple output operands at a time, each of which is generated by a different PE. In a standard convolution, MAC operations may include accumulations across the channels. For instance, as opposed to generating an output operand, a PE may accumulate products across different channels to generate a single output point.

In some embodiments, the PE array 250 may perform MAC operations in quantized inference, such as MAC operations in a quantized convolution. In some embodiments, a PE in the PE array 250 may receive quantized activation and quantized weights and compute a quantized MAC result. The quantized MAC result may be a quantized value in an integer format and may be the output of the PE. In some embodiments, the PE may also include a quantization multiplier that can multiply a quantization scale with the quantized MAC result, and the output of the PE may be a real value in a floating-point format. The PE may include no quantization subtractors as zero-point offsetting is not needed for the MAC operations in quantized inference.

The data distributor 260 distributes data (e.g., input activations, weights, etc.) of deep learning operations to PEs in the PE array 250 for the PE array 250 to process the data to perform computations in the deep learning operations. The data may be stored in the local memory 240. In some embodiments, the data distributor 260 may be arranged on a data load path from the local memory 240 to the PE array 250.

In some embodiments, the data distributor 260 may distribute data of a deep learning operation to the PEs based on the structures of an input tenor and one or more weight tensors of the deep learning operation. For instance, the input tensor may include a plurality of input channels. A weight tensor may include weights in the input channels. In embodiments where the deep learning operation has multiple output channels, there would be multiple weight tensors, each of which is for one of the output channels. The data distributor 260 may distribute the data based on output channels. In an embodiment, the data distributor 260 may distribute the weight tensors to different PE columns. For instance, each PE column may receive a different weight tensor from the other PE columns. Each of the PE columns may receive the input tensor and perform MAC operations on the input tensor and the corresponding weight tensor.

For a single PE column, the data distributor 260 may partition the input tensor into input operands and partition the weight tensor into weight operands. The data distributor 260 may distribute an input operand and a corresponding weight operand to a PE in the PE column. The PE may perform a MAC operation on the input operand and weight operand. The data distributor 260 may distribute different input operands/weight operands to the same PE in different computation cycles. In some embodiments, an input operand may include input activations having the same (X, Y) coordinates but in different input channels. Similarly, a weight operand may include input weights having the same (X, Y) coordinates but in different input channels. In an example, an activation in the input operand may be in a different input channel from all the other activations in the input operand, and a weight in the weight operand may be in a different input channel from all the other weights in the weight operand.

The post processing unit 280 processes outputs of the PE array 250. In some embodiments, the post processing unit 280 computes activation functions. The post processing unit 280 may receive outputs of the PE array 250 as inputs to the activation functions. The post processing unit 280 may transmit the outputs of the activation functions to the local memory 240. The outputs of the activation functions may be retrieved later by the PE array 250 from the local memory 240 for further computation. For instance, the post processing unit 280 may receive an output tensor of a CNN layer from the PE array 250 and computes one or more activation functions on the output tensor. The results of the computation by the post processing unit 280 may be stored in the local memory 240 and later used as input tensor of the next CNN layer. In addition to or alternative to activation functions, the post processing unit 280 may perform other types of post processing on outputs of the PE array 250. For instance, the post processing unit 280 may apply a bias on an output of the PE array 250.

In some embodiments, the local memory 240 is associated with a load path and a drain path may be used for data transfer within the compute block 230. For instance, data may be transferred from the local memory 240 to the PE array 250 through the load path. Data may be transferred from the PE array 250 to the local memory 240 through the drain path. The data distributor 260 may be arranged on the load path. The post processing unit 280 may be arranged on the drain path for processing outputs of the PE array before the data is written into the local memory 240.

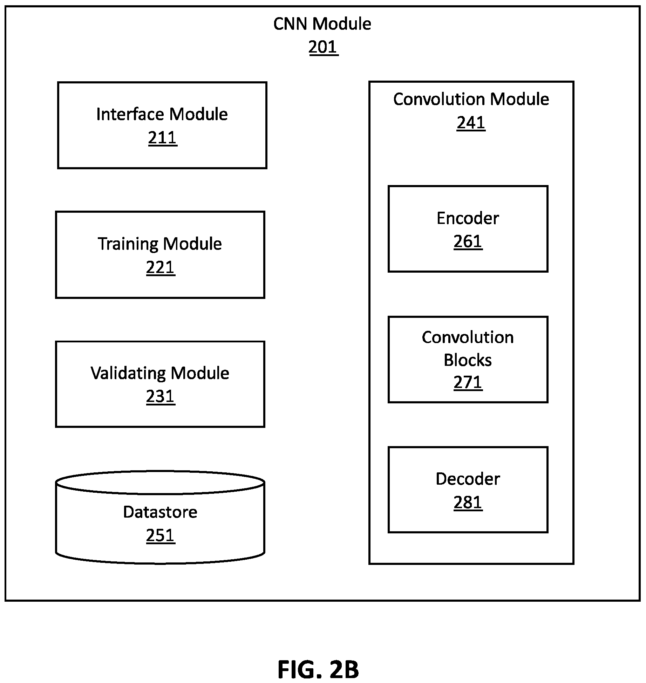

FIG. 2B is a block diagram of the CNN module 201, in accordance with various embodiments. In the embodiments of FIG. 2B, the CNN module 201 includes an interface module 211, a training module 221, a validating module 231, a convolution module 241, and a datastore 251. In other embodiments, alternative configurations, different or additional components may be included in the CNN module 201. Further, functionality attributed to a component of the CNN module 201 may be accomplished by a different component included in the CNN module 201 or a different module or system, such as the CNN accelerator 202.

The interface module 211 facilitates communications of the CNN module 201 with other modules or systems. For example, the interface module 211 establishes communications between the CNN module 201 with an external database to receive data that can be used to train CNNs or input into CNNs to perform tasks. As another example, the interface module 211 supports the CNN module 201 to distribute CNNs to other systems, e.g., computing devices configured to apply CNNs to perform tasks.

The training module 221 trains CNNs by using a training dataset. The training module 221 forms the training dataset. In an embodiment where the training module 221 trains an CNN to recognize objects in images, the training dataset includes training images and training labels. The training labels describe ground-truth classifications of objects in the training images. In some embodiments, each label in the training dataset corresponds to an object in a training image. In some embodiments, a part of the training dataset may be used to initially train the CNN, and the rest of the training dataset may be held back as a validation subset used by the validating module 231 to validate performance of a trained CNN. The portion of the training dataset not including the tuning subset and the validation subset may be used to train the CNN.

The training module 221 also determines hyperparameters for training the CNN. Hyperparameters are variables specifying the CNN training process. Hyperparameters are different from parameters inside the CNN (e.g., weights of filters). In some embodiments, hyperparameters include variables determining the architecture of the CNN, such as number of hidden layers, etc. Hyperparameters also include variables which determine how the CNN is trained, such as batch size, number of epochs, etc. A batch size defines the number of training samples to work through before updating the parameters of the CNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the CNN. An epoch may include one or more batches. The number of epochs may be 3, 30, 300, 300, or even larger.

The training module 221 defines the architecture of the CNN, e.g., based on some of the hyperparameters. The architecture of the CNN includes an input layer, an output layer, and a plurality of hidden layers. The input layer of an CNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the CNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between two convolution layers. A fully connected layer involves weights, biases, and neurons. It connects neurons in one layer to neurons in another layer. It is used to classify images between different categories by training. Note that training a CNN is different from using the CNN in real-time and when using a CNN to process data that is received in real-time, latency can become an issue that is not present during training, when the data set can be pre-loaded.

In the process of defining the architecture of the CNN, the training module 221 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 221 defines the architecture of the CNN, the training module 221 inputs a training dataset into the CNN. The training dataset includes a plurality of training samples. An example of a training sample includes an object in an image and a ground-truth label of the object. The training module 221 modifies the parameters inside the CNN ("internal parameters of the CNN") to minimize the error between labels of the training objects that are generated by the CNN and the ground-truth labels of the objects. The internal parameters include weights of filters in the convolutional layers of the CNN. In some embodiments, the training module 221 uses a cost function to minimize the error.

The training module 221 may train the CNN for a predetermined number of epochs. The number of epochs is a hyperparameter that defines the number of times that the deep learning algorithm will work through the entire training dataset. One epoch means that each sample in the training dataset has had an opportunity to update internal parameters of the CNN. After the training module 221 finishes the predetermined number of epochs, the training module 221 may stop updating the parameters in the CNN. The CNN having the updated parameters is referred to as a trained CNN.

The validating module 231 verifies accuracy of trained or compressed CNNs. In some embodiments, the validating module 231 inputs samples in a validation dataset into a trained CNN and uses the outputs of the CNN to determine the model accuracy. In some embodiments, a validation dataset may be formed of some or all the samples in the training dataset. Additionally or alternatively, the validation dataset includes additional samples, other than those in the training sets. In some embodiments, the validating module 231 may determine an accuracy score measuring the precision, recall, or a combination of precision and recall of the CNN. The validating module 231 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validating module 231 may compare the accuracy score with a threshold score. In an example where the validating module 231 determines that the accuracy score of the augmented model is less than the threshold score, the validating module 231 instructs the training module 221 to re-train the CNN. In one embodiment, the training module 221 may iteratively re-train the CNN until the occurrence of a stopping condition, such as the accuracy measurement indication that the CNN may be sufficiently accurate, or a number of training rounds having taken place.

The convolution module 241 performs real-time data processing, such as for speech enhancement, dynamic noise suppression, blind source separation, and/or self-noise silencing. In the embodiments of FIG. 2B, the convolution module 241 includes a tensor encoder 261, convolution blocks 271, and a decoder 281. In other embodiments, alternative configurations, different or additional components may be included in the convolution module 241. Further, functionality attributed to a component of the convolution module 241 may be accomplished by a different component included in the convolution module 241, the CNN module 201, or a different module or system, such as the CNN accelerator 202.

The encoder 261 can be a short form Fouriertransform (STFT) encoder. In some examples, the input data to the encoder 261 is audio data. The input data includes input tensors which can each include multiple frames of data. In some examples, the encoder 261 is an STFT that is calculated for a 16 ms audio data chunk, an 8 ms frame hop size, and an audio sample rate of 48 kHz. In other examples, the encoder 261 is a latent encoder structure.

In various examples, a STFT is a Fourier-related transform used to determine the sinusoidal frequency and phase content of local sections of a signal as it changes over time. Generally, STFTs are computed by dividing a longer time signal into shorter segments of equal length and then computing the Fourier transform separately on each shorter segment. This results in the Fourier spectrum on each shorter segment. The changing spectra can be plotted as a function of time, for instance as a spectrogram. In some examples, the STFT is a discrete time STFT, such that the data to be transformed is broken up into tensors or frames (which usually overlap each other, to reduce artifacts at the boundary). Each tensor or frame is Fourier transformed, and the complex result is added to a matrix, which records magnitude and phase for each point in time and frequency.

The input tensor has a size of *H* × *W* × *C*, where *H* denotes the height of the input tensor (e.g., the number of rows in the input tensor or the number of data elements in a row), W denotes the width of the input tensor (e.g., the number of columns in the input tensor or the number of data elements in a row), and C denotes the depth of the input tensor (e.g., the number of input channels).

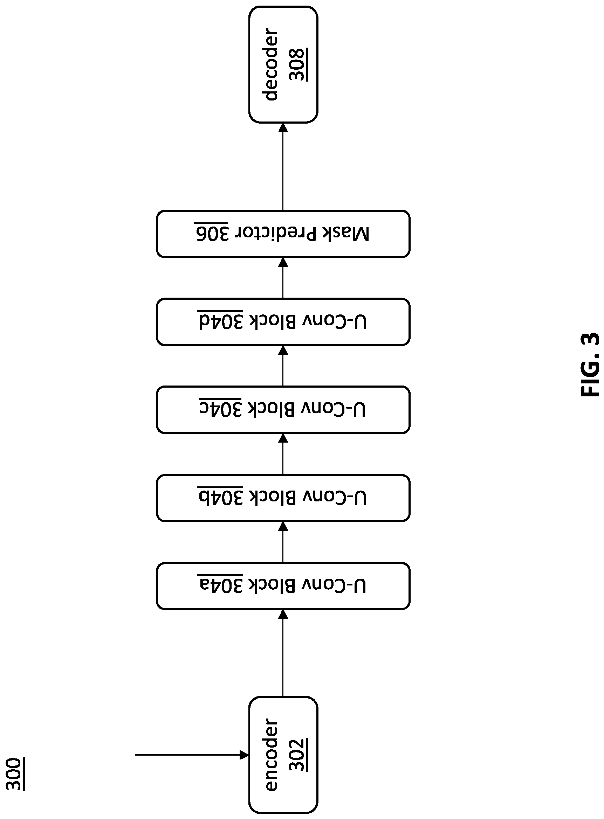

As described in greater detail below with respect to FIG. 3, encoded data from the encoder 261 is input to a series of convolution blocks 271. The convolution blocks 271 expand the height of the input tensor at a PWC (pointwise convolution) layer and then input the expanded input tensor to multiple depthwise convolution layers. The number of depthwise convolution layers is a parameter of the model as discussed in greater detail with respect to FIGS. 5A-5D and 6A-6E. The output from the convolution blocks is input to a decoder 281. In various examples, the decoder can be an inverse STFT decoder. In some examples, the decoder 281 is a latent decoder.

An inverse STFT is generated by inverting the STFT. In various examples, the STFT is processed by the CNN before it is inverted at the decoder 281. By inverting the STFT, the signal output from the decoder 281 is the same type of signal as was input to the encoder 261. One way of inverting the STFT is by using the overlap-add method, which also allows for modifications to the STFT complex spectrum. This makes for a versatile signal processing method, referred to as the overlap and add with modifications method.

The datastore 251 stores data received, generated, used, or otherwise associated with the CNN module 201. For example, the datastore 251 stores the datasets used by the training module 221 and validating module 231. The datastore 251 may also store data generated by the training module 221 and validating module 231, such as the hyperparameters for training CNNs, internal parameters of trained CNNs (e.g., weights, etc.), data for sparsity acceleration (e.g., sparsity bitmap, etc.), and so on. In some embodiments the datastore 251 is a component of the CNN module 201. In other embodiments, the datastore 251 may be external to the CNN module 201 and communicate with the CNN module 201 through a network.

FIG. 2C illustrates the local memory 240, in accordance with various embodiments. The local memory 240 includes a plurality of databanks 245 (individually referred to as "databank 245"). Each databank 245 includes a plurality of storage units 247 (individually referred to as "storage unit 247"). The number of databanks 245 or storage units 247 in the local memory 240 may vary in different embodiments. In an example, the local memory 240 may include four databanks 245. A databank 245 may include 16 storage unit 247. In other embodiments, the local memory 240 may include a different number of databanks 245. Also, a databank 245 may include a different number of storage units 247.

In some embodiments, a databank 245 may store operands to be processed by a PE column. For instance, the PE column may perform MAC operations on the operands. In some embodiments, for a single databank 245, the number of storage units 247 may equal the number of PEs in the corresponding PE column. A storage unit 247 may store an operand to be processed by a single PE. The operands may be read in an order, e.g., the order the storage units 247 are arranged in the databank 245.

### Example CNN with STFT encoder/decoder

FIG. 3 illustrates a convolution network 300 called a Successive Down-sampling and Resampling of Multi-Resolution Features (*sudo rm* -*rf*) network, to which the systems and methods provided herein can be applied, in accordance with various embodiments. In some examples, the convolution network 300 performs temporal down-sampling. In other examples, the systems and methods provided herein can be applied to other network topologies that perform temporal down-sampling (e.g., U-Net). The systems and methods presented utilize an inference implementation of the convolution network 300. In various examples, the *sudo rm -rf* network is a speech enhancement network. The convolution network 300 includes an encoder 302, four U-Convolution Blocks (U-ConvBlocks) 304a, 304b, 304c, 304d, a mask predictor 306, and a decoder 308. In some examples, the encoder 302 is a STFT encoder, and the decoder 308 is an inverse STFT (iSTFT) decoder. A SFTF encoder reduces compute complexity compared to other encoders. In some examples discussed herein, the STFT is calculated for 16 ms audio chunks, with an 8 ms frame hop size, and an audio sampling rate of 48kHz. In some examples, the systems and method discussed herein can be applied to perform inference of models that use latent encoder/decoder structures.

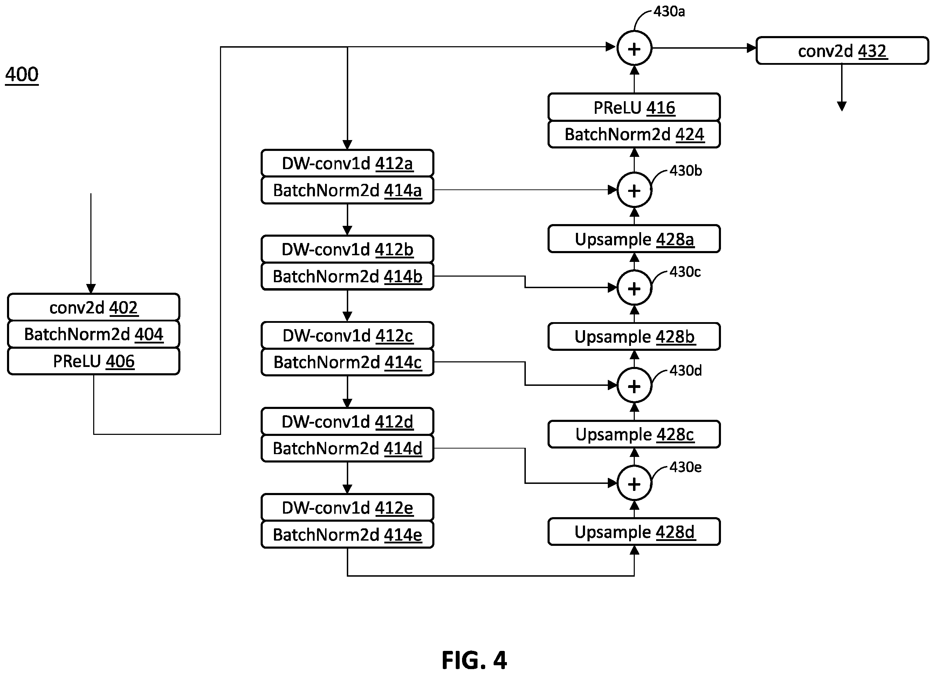

In various examples, the data output from the encoder 302 includes a channel C, and a height H, and the width W applied to the data [C,H,W]. In some examples, data can include a batch size N. According to various implementations, the convolution network 300 can include any number of U-ConvBlocks. Each U-ConvBlock extracts information. The U-ConvBlocks 304a-304d are discussed in greater detail with respect to FIG. 4. The mask predictor 306 can be realized by PWC.

In some examples, PWC is a type of convolution that uses a 1x1 kernel (a kernel that iterates through every point). The kernel has a depth of equal to the number of channels the input data has. A 1x1 convolutional layer (or pointwise convolution) consists of a convolutional filter of size 1x1 which works on one point per channel at a time. A PWC can be used in conjunction with depthwise convolutions.

A PWC is a convolutional filter that can be used for parameter reduction. In some examples, a PWC can also be used to increase or decrease the number of channels in feature maps for computational efficiency. In some examples, PWCs can be used to increase the number of channels before applying convolutional filters of a larger kernel size depthwise. PWCs can then be used again to decrease the number of channels. PWCs can also be used after depthwise and groupwise convolutions to capture channel-wise correlation.

### Example U-Convolution Blocks

FIG. 4 illustrates a U-Convolution Block (U-ConvBlock) 400, which can be included in a convolution network as discussed herein, such as the convolution network 300 of FIG. 3, in accordance with various embodiments. The U-ConvBlock 400 has an adjustable W value (where the UV-dimension represents the time axis). In various examples, a U-ConvBlock 400 receives an input tensor at a first convolution block 402. The input tensor may have a spatial size of C×H×W, where C indicates the number of input channels in the input tensor, H indicates the height of the input tensor, and W indicates the width of the input tensor. The first convolution block 402 is a 2D convolutional layer conv2d. At the first convolution block 402, the input tensor undergoes a 2-dimensional convolution at a 1×1 PWC layer, which expands the height of the input tensor. The output from the first convolution block is a 4D tensor (N×C×H×W). The output from the first convolution block 402 is input to a BatchNorm2d layer 404. The BatchNorm2d layer 404 is a batch normalization layer, which is a trainable layer that normalizes and re-scales data during training. After training, the BatchNorm2d layer 404 is static like other layers.

At the PReLU block 406, a parametric rectified linear unit (PReLU) activation function is applied to the output of the BatchNorm2d layer 404. A PReLU is an activiation function that generalizes a traditional rectified linear unit (ReLU) by applying a slope to negative values. In particular, a ReLU outputs the input directly if the input is positive, and a ReLU outputs a zero for any negative input. A PReLU instead applies a slope to negative input. In some examples, a PReLU activation function adaptively learns the parameters of the rectifiers.

The output from the PReLU block 406 is input into a series of one-dimensional depthwise convolution layers (DW-conv1d) 412a, 412b, 412c, 412d, 412e. In some embodiments, each of the convolutional layers 412a-412d may have a kernel with a kernel size of five. While the U-ConvBlock 400 includes five DW-conv layers, in other examples, any number of DW-conv layers can be included in the U-ConvBlock. According to various examples, the first DW-conv1d layer 412a has a stride of 1, while the second 412b, third 412c, fourth 412c, and fifth 412e DW-conv1d layers each have a stride of two. The stride may indicate the number of activations the kernel jumps over when sliding across the input tensor. Thus, this chain of layers performs temporal down-sampling with factor of 16. That is, after the fifth DW-conv1d layer 412e, the UV-dimension of the tensor will be reduced 16 times to *W*/16.

As shown in FIG. 4, the output of the conversion layers is then upsampled at the upsample blocks 428a, 428b, 428c, 428d. Each upsample block 428a, 428b, 428c, 428d upsamples with factor of two over *UV-dimension.* For instance, each upsample block 428a, 428b, 428c, 428d may insert two data points into each side of the UV-dimension of the input tensor, so the UV-dimension of the input tensor may have four additional data points after the upsampling operation. Thus, the upsampling through the four upsample blocks 428a, 428b, 428c, 428d results in the output returning to the original time resolution. In various examples, to produce meaningful output during inference, the convolutional network is fed with multiples of 32 frames. However, using the U-ConvBlock 400 can result in significant latency, preventing real-time inference. While some solutions can decrease latency, current solutions are limited to inference performed using only one input frame (i.e., *W*=1). There is a need for solutions that can accommodate networks with a stride of two over the UV-dimension.

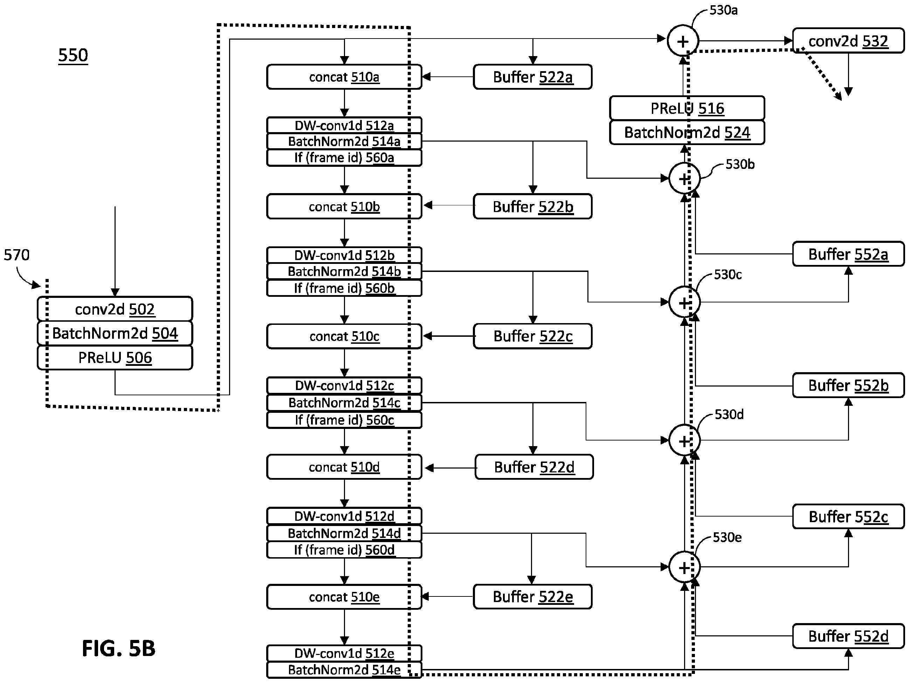

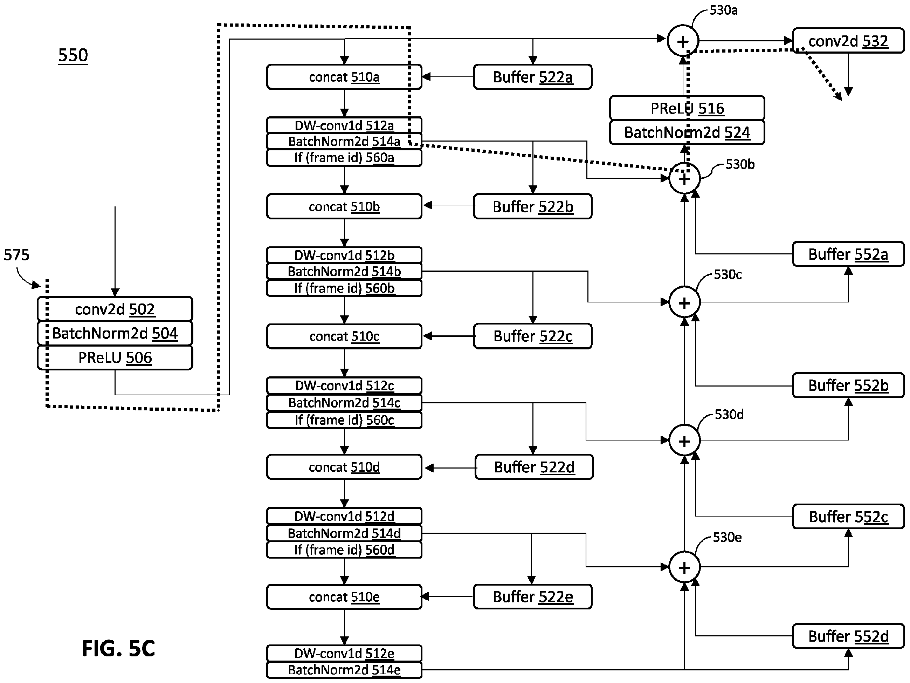

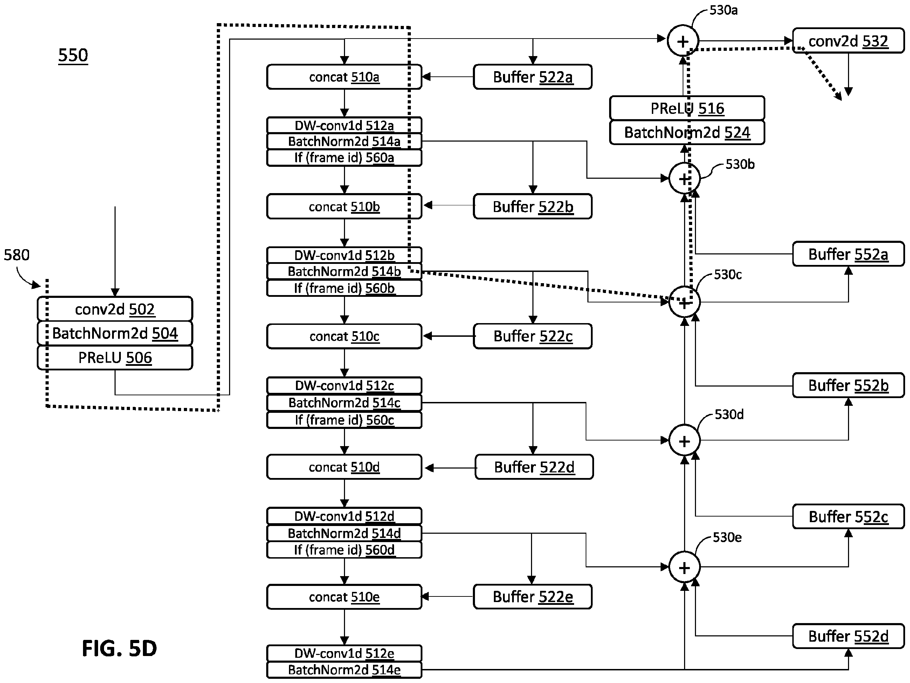

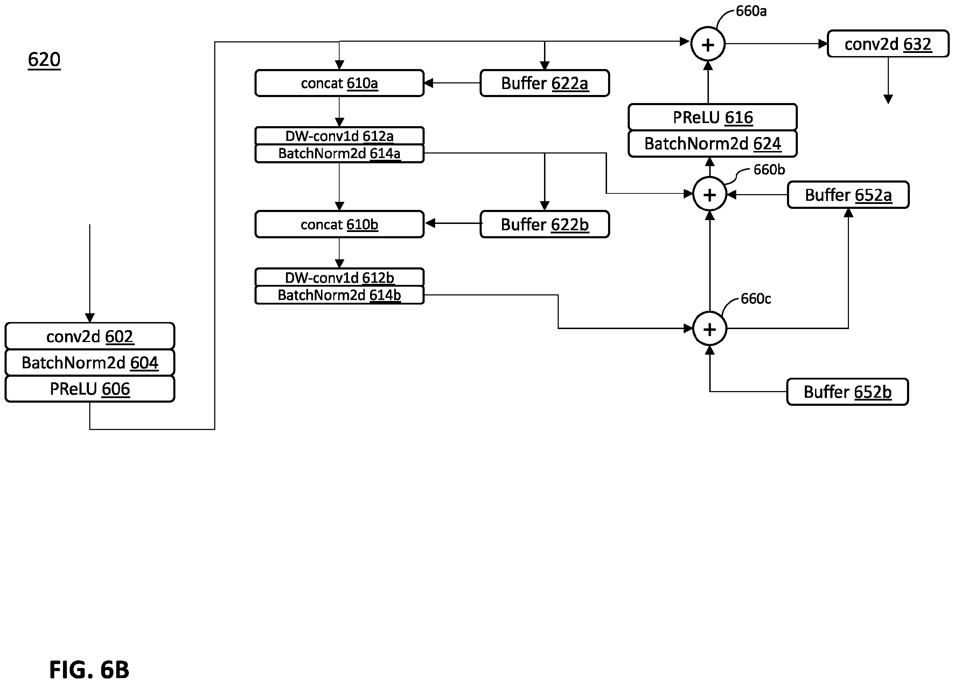

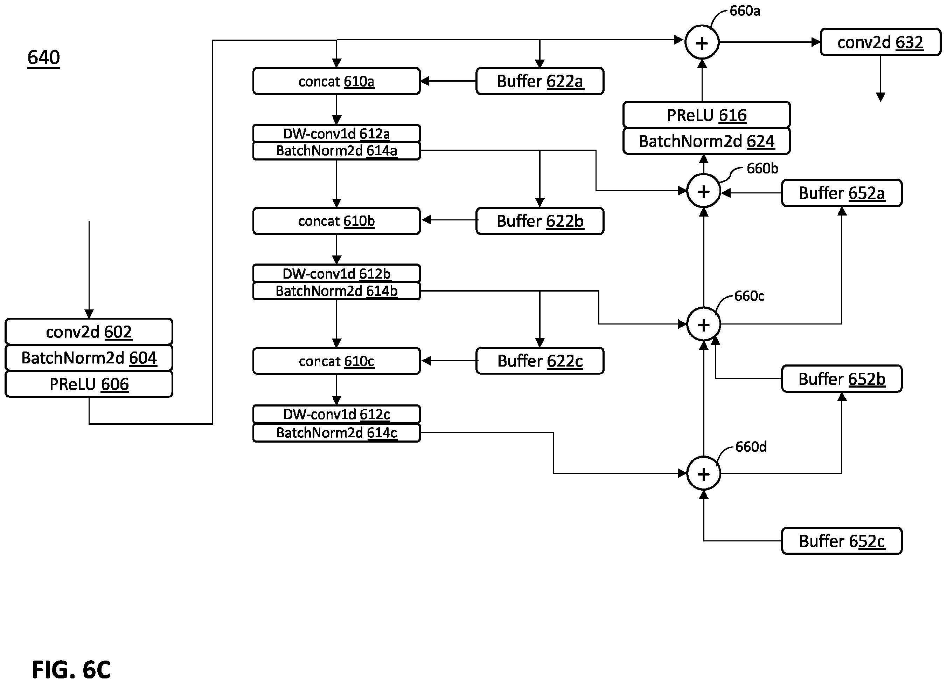

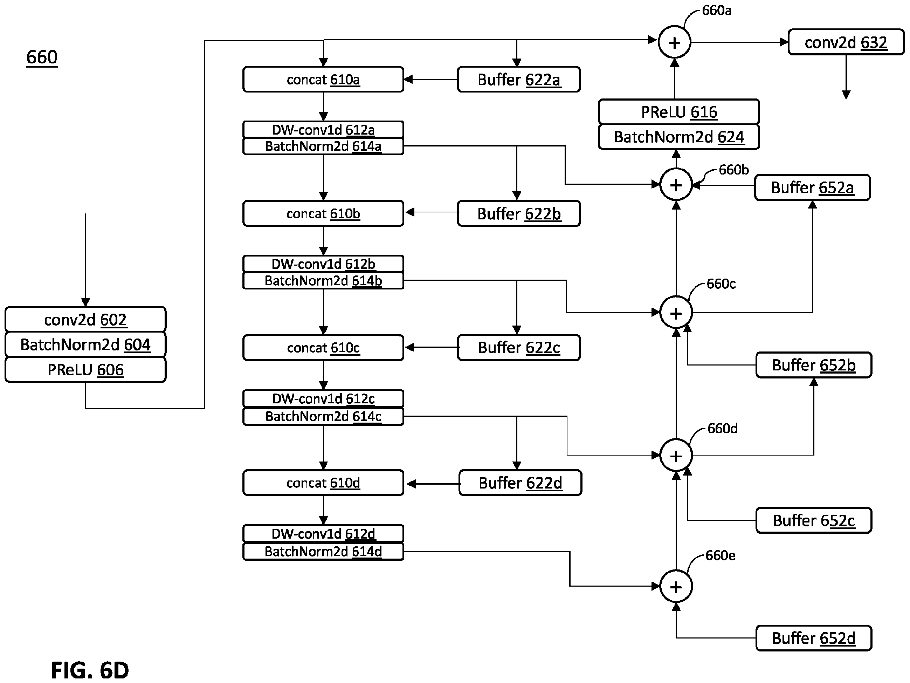

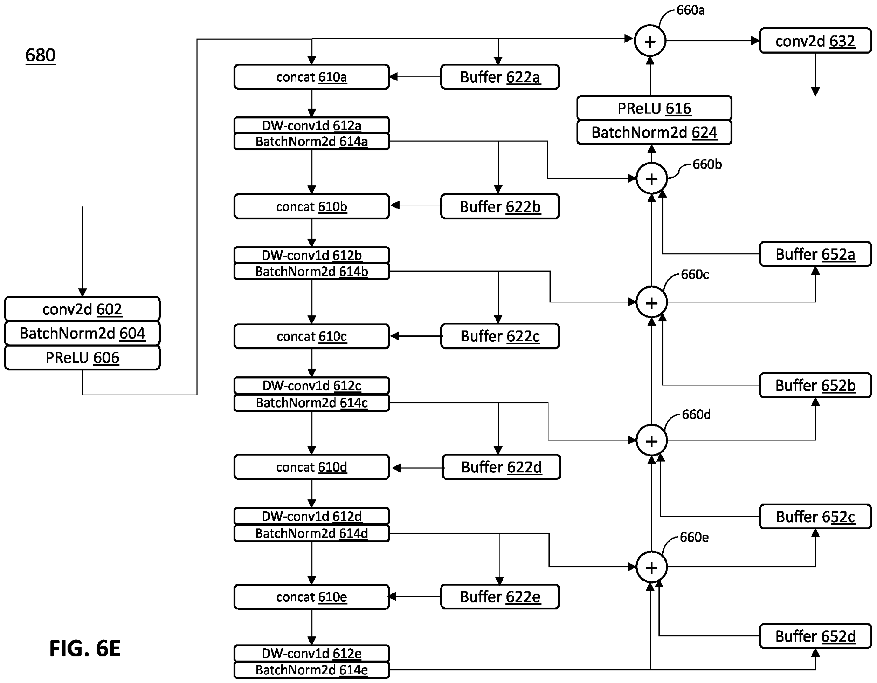

FIG. 5A illustrates a U-Convolution Block (U-ConvBlock) 500, which can be included in a convolution network as discussed herein, such as the convolution network 300 of FIG. 3, in accordance with various embodiments. In various implementations, as described, for example, with respect to FIGS. 5B, 5C, 5D, 6A, 6B, 6C, 6D, and 6E, the U-ConvBlock 500 can be used for inference improvements. In some examples, the U-ConvBlock 500 can decrease latency and provides a solution for networks with a stride of two over the UV-dimension. As described with respect to FIGS. 5B-5D, the U-ConvBlock 500 can decrease latency and provides a solution for networks with a stride of one over the UV-dimension. In some examples, the U-ConvBlock 500 replaces the upsample blocks 428a, 428b, 428c, 428d, which perform nearest-neighbor upsampling, with circular buffers, upsampling buffers 552a, 552b, 552c, 552d, as described herein.

According to various implementations, the U-ConvBlock 500 includes buffers for handling convolutions over UV-dimensions. In particular, the U-ConvBlock 500 includes a first set of buffers, circular buffers 522a-522e, for handling convolutions over UV-dimension. Each of the circular buffers 522a-522e has a size [1,768,4], A first circular buffer 522a of the first set of buffers receives input from the PReLU block 506. Similarly, the second-fifth circular buffers 522b-522e of the first set of circular buffers receive input from the BatchNorm2d layer 514a-514d, respectively, of the previous convolution. The BatchNorm2d layers 514a-514e perform batch normalization on the output from the one-dimensional depthwise convolution layers (DW-conv1d) 512a-512e, respectively. In some examples, each of the one-dimensional depthwise convolution layers (DW-conv1d) 512a-512e has a kernel having a kernel size of five. The U-ConvBlock 500 further includes a second set of buffers, upsampling buffers 552a-552d, which can be used to perform nearest-neighbor upsampling. The upsampling buffers 552a-552d can also be circular buffers. The U-ConvBlock 500 also includes "if" blocks 560a-560d, which are described below with respect to FIGS. 5B-5D.

In some examples, the input to the 2D convolution layer conv2d 502 has a [C,H,W] data layout with the size [1,384,1], and the output from the PReLU layer 506 following the 2D convolution and batch normalization has a size [1,768,1]. Thus, the input to the first concatenation layer concat 510a has a data layout [1,768,1]. At the concat 510a block, the new data from the PReLU block 506 is concatenated to data from the first circular buffer 522a. Thus two matrices or two tensors are concatenated, with the content from the first circular buffer 522a being at the beginning of the concatenation, and the new data from the PReLU block 506 being concatenated to the end of the data from the first circular buffer 522a. The concatenation is performed over the last dimension of both tensors, such that the data from the PReLU block 506 having a layout [1,768,1] is concatenated to data from the first circular buffer having a layout [1,768,4], resulting in an output from the concatenation block 510a having a data layout [1,786,5]. In other examples, the data can have a different data layout, for instance a different height. In various examples, the data can have a different size.

The output from the first concatenation layer 510a is input to the first 1D depthwise convolution layer 512a, which performs a convolution operation on the data as described above. In various examples, the first 1D depthwise convolution layer 512a has a kernel having a kernel size of five, and has a stride of one. The input to the first 1D depthwise convolution layer 512a has a data size [1,786,5]. The output from the first 1D depthwise convolution layer 512a undergoes batch normalization at the first BatchNorm2d layer 514a, and the output from the BatchNorm2d layer 514a is input to the second buffer 522b and the second adder 530b. The output from the first BatchNorm2d layer 514a has a data size [1,768,1].

Similarly, the output from the second 1D depthwise convolution layer 512b undergoes batch normalization at the second BatchNorm2d layer 514b, and the output from the BatchNorm2d layer 514b is input to the third buffer 522c and the third adder 530c. The output from the third adder 530c is input to the first upsampling buffer 552a. The output from the second BatchNorm2d layer 514b has a data size [1,768,1].

Data from the upsampling buffers 552a-552d is input to corresponding adders 530b-530e for adding to data for a subsequent frame and/or convolution. As shown in FIG. 5A, the first adder 530a combines data from the first PReLU block 506, and data from the second PReLU block 516, wherein the second PReLU block 516 is outputting batch normalized data from the second adder 530b. As described above, the second adder 530b adds data from the first BatchNorm2d block 514a, data from the third adder 530c, and data from the first upsampling buffer 552a. The third adder 530c combines data from the second BatchNorm2d block 514b, data from the fourth adder 530d, and data from the second upsampling buffer 552b. The fourth adder 530d combines data from the third BatchNorm2d block 514c, data from the fifth adder 530e, and data from the third upsampling buffer 552c. The fifth adder 530e adds data from the fourth BatchNorm2d block 514d, data from the fifth BatchNorm2d block 514e, and data from the fourth upsampling buffer 552d. The output from the first adder 530a is transmitted to a final convolution block conv2d 532, where it undergoes a final two-dimensional convolution to decrease the height of the data generate an output tensor having a size [1,384,1].

In various examples, the output from each of the concatenation layers 510a-510e includes the content of the corresponding circular buffer 522a-522e with the batch normalized convolution output from the previous layer concatenated to the end.

### Example Conditional Execution of Convolution Network

FIGS. 5B-5D illustrate conditional execution of a U-Convolution Block (U-ConvBlock) 550, which can be included in a convolution network as discussed herein, such as the convolution network 300 of FIG. 3, in accordance with various embodiments. FIGS. 5B-5D illustrate a performance of model inference. In various implementations, the U-ConvBlock 550 can be used for neural networks in which the hardware supports the use of an "if" operator and conditional execution of selected elements of the topology. For instance, a CPU (Central Processing Unit) supports the use of an "if" operator. While the U-ConvBlock 500 of FIG. 5A can be used in training using DW-conv1d layers 512b-512e with a stride of 2, the latency using a stride of two can be too high for real-time applications. The second set of buffers, upsampling buffers 552a-552d, perform nearest-neighbor upsampling. In various examples, FIGS. 5B-5D illustrate a U-ConvBlock 550 inference for *W*=1*.*

According to various implementations, systems and methods are provided for a convolutional neural network with decreased latency for real-time applications using the U-ConvBlock 550 and various additional conditions in the network. In some examples, in the U-ConvBlock 550, the DW-conv1d layers 512b-512e have a stride of one. The DW-conv1d layers 512b-512e each have a kernel having a spatial size of one-by-five. Additionally, the U-ConvBlock 550 includes a conditional block 560a-560d after the BatchNorm2d blocks 514a-514d, where the conditional block 560a-560d determines the depth of the convolution. In various examples, the depth of the convolution depends on the frame number. The conditional blocks 560a-560d introduce "if" conditions inside the network.

In some examples, the following table can be used to determine the depth of the convolution:

**Table 1: Relation between frame number and network depth**

| | | | | | | | | | | | | | | | | |
|---|---|---|---|---|---|---|---|---|---|---|---|---|---|---|---|---|
| Frame number | 1 | 2 | 3 | 4 | 5 | 6 | 7 | 8 | 9 | 10 | 11 | 12 | 13 | 14 | 15 | 16 |
| Network Depth | 5 | 1 | 2 | 1 | 3 | 1 | 2 | 1 | 4 | 1 | 2 | 1 | 3 | 1 | 2 | 1 |

In some examples, for frame 17, the sequence of network depths shown above start again, such that for frame 17, the network depth is 5, for frame 16, the network depth is 1, etc. In some examples, the network depth is determined such that buffered data is updated and not reused for subsequent frames. Note that in other network configurations, the depth of the convolution for each frame numbers is different, and the depth for each frame depends on network parameters. FIGS. 5B-5D illustrate a performance of model inference using conditional flow and with the stride values in the DW-conv1d layers 512a-512d set to one. In some examples, *W* = 1, and depthwise convolution is performed with non-single stride values using a conditional flow. According to various implementations, the U-ConvBlock 550 is implemented inside a neural network accelerator.

FIG. 5B shows the data flow for the U-ConvBlock 550 for a first frame, as illustrated by the dotted line 570. As shown in FIG. 5B, for the first frame, all convolutions (512a-512e) are calculated. Batch normalized convolution data from the BatchNorm2d layers 504, 514a-514d can be buffered in the first set of buffers 522a-522e, respectively. Additionally, the data in the upsampling buffers 552a-552d is updated based on the respective BatchNorm2d layer 514b-514e outputs.

FIG. 5C shows the data flow for the U-ConvBlock 550 for a second frame, as illustrated by the dotted line 575. As shown in FIG. 5C, for the second frame, the first convolution 512a is performed. For the second frame, as illustrated in FIG. 5C, the second-fifth convolutions 512b-512e are skipped. In some examples, the data in the first buffer 522a is updated for the second frame based on the first convolution layer DW-conv1d 512a output.

FIG. 5D shows the data flow for the U-ConvBlock 550 for a third frame, as illustrated by the dotted line 580. As shown in FIG. 5D, for the third frame, the first convolution at the first convolution layer DW-conv1d 512a and the second convolution at the second convolution layer DW-conv1d 512b are performed. For the third frame, as illustrated in FIG. 5D, the third-fifth convolutions 512c-512e are skipped. The data in the first buffer 522a is updated for the third frame based on the first convolution layer DW-conv1d 512a output, and the data in the second buffer 522b is updated for the third frame based on the second convolution layer DW-conv1d 512b output. Additionally, the data in the first upsampling buffer 552a is updated frame based on the second convolution layer DW-conv1d 512b output.

### Example Network Split into Sub-Models

FIG. 6A-6E illustrate U-Convolution Blocks (U-ConvBlock) 600, 620, 640, 660, 680, which can be included in a convolution network as discussed herein, such as the convolution network 300 of FIG. 3, in accordance with various embodiments. Each of the U-ConvBlocks 600, 620, 640, 660, 680 is a sub-model and the five U-ConvBlocks 600, 620, 640, 660, 680 represent all possible depth values for a network with a depth of five. In other implementations, a convolution network can have a different depth and a corresponding different number of sub-models. According to various examples, a convolution network including sub-models such as the U-ConvBlocks 600, 620, 640, 660, 680 can be implemented in an artificial intelligence offload engine and in other platforms that don't have support for "if" conditions.

According to various implementations, the U-ConvBlocks 600, 620, 640, 660, 680, each use the same weights in the convolution layers 612a-612e, and share the same buffers 622a-622e and circular buffers 652a-652d. FIG. 6A is an example of a U-ConvBlock 600 having a single depthwise convolution layer DW-conv1d 612a. FIG. 6B is an example of a U-ConvBlock 620 having two depthwise convolution layers DW-conv1d 612a, 612b. FIG. 6C is an example of a U-ConvBlock 640 having three depthwise convolution layers DW-conv1d 612a, 612b, 612c. FIG. 6D is an example of a U-ConvBlock 660 having four depthwise convolution layers DW-conv1d 612a, 612b, 612c, 612d. FIG. 6D is an example of a U-ConvBlock 680 having five depthwise convolution layers DW-conv1d 612a, 612b, 612c, 612d, 612e.

In various examples, for each frame, one of the sub-model U-ConvBlocks 600, 620, 640, 660, 680 is selected, depending on the frame number of the input tensor and the corresponding depth of the convolution. For each of the sub-model U-ConvBlocks 600, 620, 640, 660, 680, the input tensor is received at a first convolution block 602 where it undergoes a 2-dimensional convolution at a 1x1 PWC layer, which expands the height of the input tensor. The output from the first convolution block 602 is input to a BatchNorm2d layer 604 for batch normalization as described above. At the PReLU block 606, an activation function is applied to the output of the BatchNorm2d layer 604, which applies a slope to any negative values, as described above.

The depth of the convolution for each frame can be determined, for example, based on the table (Table 1) as described above. For a first frame, the depth of the convolution is 5, and the fifth U-ConvBlock 680 is used, as shown in FIG. 6E. Thus, the output from the PReLU block 606 is input through five convolution layers 612a-612e. The output from the PReLU block 606 is also stored in a circular buffer 622a, and the output from each BatchNorm2d layer 614a-614d is stored in a corresponding circular buffer 622b-622e. The output from each convolution layer 612a-612e is input to a BatchNorm2d layer 614a-614e. The output from the BatchNorm2d layers 614a-614d is transmitted to the subsequent convolution layer 612b-612e. The output from each BatchNorm2d layers 614a-614d is also transmitted to an adder 660b-660e for upsampling. Note that the output from the BatchNorm2d layer 614e is also transmitted to the adder 660e for upsampling. Additionally, data from the third, fourth, and fifth adders 660c, 660d, 660e is stored in a corresponding respective upsampling buffer 652a-652c, where it is used for upsampling a subsequent convolution operation. Similarly, data from the fifth BatchNorm2d layer 614e is stored in a fourth upsampling buffer 652d, where it is used for upsampling a subsequent convolution operation. The output from all the convolution layers 612a-612e is processed and combined at a final BatchNorm2d block 624, and subsequently undergoes another PReLU activation function at the second PReLU block 616. The output from the second PReLU block 616 is added to the output from the first PReLU block 606 at a first adder 660a, and transmitted to a final convolution block conv2d 632, where it undergoes a final two-dimensional pointwise convolution to generate the output tensor for the fifth U-ConvBlock 680. In various examples, the output tensor of the fifth U-ConvBlock 680 has a data size [1,384,1].

When the depth of the convolution is one, the first sub-model U-ConvBlock 600 shown in FIG. 6A is used, and the output from the PReLU block 606 is input through one convolution layer 612a. The output from the PReLU block 606 is stored in the first circular buffer 622a. The output from the convolution layer 612a batch normalized at the BatchNorm2d layer 614a, from which it is transmitted to an adder 660b, which adds the BatchNorm2d layer 614a output with data stored in a first upsampling buffer 652a, effectively upsampling the data. The output from the adder 660b is processed at a final BatchNorm2d block 624, and subsequently undergoes another PReLU activation function at the second PReLU block 616. The output from the second PReLU block 616 is added to the output from the first PReLU block 606 at the first adder 660a, and transmitted to a final convolution block conv2d 632, where it undergoes a final two-dimensional convolution to generate the output tensor for the first U-ConvBlock 600.

When the depth of the convolution is two, the second sub-model U-ConvBlock 620 (shown in FIG. 6B) is used, the output from the PReLU block 606 is input through two convolution layers 612a, 612b. The output from the PReLU block 606 is stored in the first circular buffer 622a. The batch normalized output from the first convolution layer 612a, the output from BatchNorm2d 614a, is stored in a second circular buffer 622b. The output from each convolution layer 612a, 612b is batch normalized at a BatchNorm2d layer 614a, 614b as described above. The output from the first BatchNorm2d layer 614a is transmitted to the subsequent convolution layer 612b. The output from the first BatchNorm2d block 614a is transmitted to a second adder 660b, and data from the second BatchNorm2d block 614b is transmitted to a third adder 660c. At the third adder 660c, data from the second upsampling buffer 652b is combined with the second batch normalized convolution layer data output from the second BatchNorm2d 614b block, and the output from the second adder is transmitted to the second adder 660b where it is combined with the data from the first convolution layer as output from the first BatchNorm2d block 614a, as well as with data from the first upsampling buffer 652a. Additionally, data from the third adder 660c is stored in the first upsampling buffer 652a, and it is used for upsampling a subsequent convolution operation. The output from the second adder 660b is processed and combined at a final BatchNorm2d block 624, and subsequently undergoes another PReLU activation function at the second PReLU block 616. The output from the second PReLU block 616 is added to the output from the first PReLU block 606, and transmitted to a final convolution block conv2d 632, where it undergoes a final two-dimensional convolution to generate the output tensor for the second U-ConvBlock 620.

When the depth of the convolution is three, the third sub-model U-ConvBlock 640 (shown in FIG. 6C) is used, and the output from the PReLU block 606 is input through three convolution layers 612a, 612b, 612c. The output from the PReLU block 606 is stored in the first circular buffer 622a. The batch normalized output from the first convolution layer 612a, the output from BatchNorm2d 614a, is stored in a second circular buffer 622b. The batch normalized output from the second convolution layer 612b, the output from BatchNorm2d 614b, is stored in a third circular buffer 622c. The output from each convolution layer 612a, 612b, 612c is batch normalized at a BatchNorm2d layer 614a, 614b, 614c. The output from the first BatchNorm2d block 614a is transmitted to the subsequent convolution layer 612b. The output from the second BatchNorm2d block 614b is transmitted to the subsequent convolution layer 612c. The output from the first BatchNorm2d block 614a is transmitted to a second adder 660b, data from the second BatchNorm2d block 614b is transmitted to a third adder 660c, and data from the third BatchNorm2d block 614c is transmitted to a fourth adder 660d. At the fourth adder 660d, data from the third upsampling buffer 652c is combined with the third convolution layer data output from the third BatchNorm2d block 614c, and the output from the fourth adder 660d is input to the third adder 660c where it is combined with the data from the second convolution layer as output from the second BatchNorm2d block 614b. Additionally, data from the fourth adder 660d is stored in the second upsampling buffer 652b, and it is used for upsampling a subsequent convolution operation. At the third adder 660c, data from the second upsampling buffer 652b is combined with the second convolution layer data output from the second BatchNorm2d block 614b, and the output from the third adder 660c is input to the second adder 660b where it is combined with the data from the first convolution layer as output from the first BatchNorm2d block 614a. Additionally, data from the third adder 660c is stored in the first upsampling buffer 652a, and it is used for upsampling a subsequent convolution operation. The output from the second adder 660b is processed at a final BatchNorm2d block 624, and subsequently undergoes another PReLU activation function at the second PReLU block 616. The output from the second PReLU block 616 is added to the output from the first PReLU block 606, and transmitted to a final convolution block conv2d 632, where it undergoes a final two-dimensional convolution to generate the output tensor for the third U-ConvBlock 640.

FIG. 6D illustrates a fourth sub-model U-ConvBlock 660, having a convolution depth of four. In the fourth sub-model U-ConvBlock 660, the output from the PReLU block 606 is input through four convolution layers 612a, 612b, 612c, 612d. The output from the PReLU block 606 is stored in the first circular buffer 622a. The batch normalized output from the first convolution layer 612a, the output from BatchNorm2d 614a, is stored in a second circular buffer 622b. The batch normalized output from the second convolution layer 612b, the output from BatchNorm2d 614b, is stored in a third circular buffer 622c. The batch normalized output from the third convolution layer 612c, the output from BatchNorm2d 614c, is stored in a fourth circular buffer 622d. The output from each convolution layer 612a, 612b, 612c, 612d is also input to a BatchNorm2d layer 614a, 614b, 614c, 614d. The output from the first BatchNorm2d block 614a is transmitted to the subsequent convolution layer 612b. The output from the second BatchNorm2d block 614b is transmitted to the subsequent convolution layer 612c. The output from the third BatchNorm2d block 614c is transmitted to the subsequent convolution layer 612d. The output from the first BatchNorm2d block 614a is transmitted to a second adder 660b, data from the second BatchNorm2d block 614b is transmitted to a third adder 660c, data from the third BatchNorm2d block 614c is transmitted to a fourth adder 660d, and data from the fourth BatchNorm2d block 614d is transmitted to a fifth adder 660e. At the fifth adder 660e, data from the fourth upsampling buffer 652d is combined with the fourth convolution layer data output from the fourth BatchNorm2d block 614d, and the output from the fifth adder 660e is input to the fourth adder 660d where it is combined with the data from the third convolution layer as output from the third BatchNorm2d block 614c. At the fourth adder 660d, data from the third upsampling buffer 652c is combined with the third convolution layer data output from the third BatchNorm2d block 614c, and the output from the fourth adder 660d is input to the third adder 660c where it is combined with the data from the second convolution layer as output from the second BatchNorm2d block 614b. At the third adder 660c, data from the second upsampling buffer 652b is combined with the second convolution layer data output from the second BatchNorm2d block 614b, and the output from the third adder 660c is input to the second adder 660b where it is combined with the data from the first convolution layer as output from the first BatchNorm2d block 614a. Additionally, data from the third adder 660c is stored in the first upsampling buffer 652a, and it is used for upsampling a subsequent convolution operation. Similarly, data from the fourth adder 660d is stored in the second upsampling buffer 652b, and it is used for upsampling a subsequent convolution operation, and data from the fifth adder 660e is stored in the third upsampling buffer 652c, and it is used for upsampling a subsequent convolution operation. The output from the second adder 660b is processed at a final BatchNorm2d block 624, and subsequently undergoes another PReLU activation function at the second PReLU block 616. The output from the second PReLU block 616 is added to the output from the first PReLU block 606 at the first adder 660a, and transmitted to a final convolution block conv2d 632, where it undergoes a final two-dimensional convolution to generate the output tensor for the fourth U-ConvBlock 660.

### Example PE Array

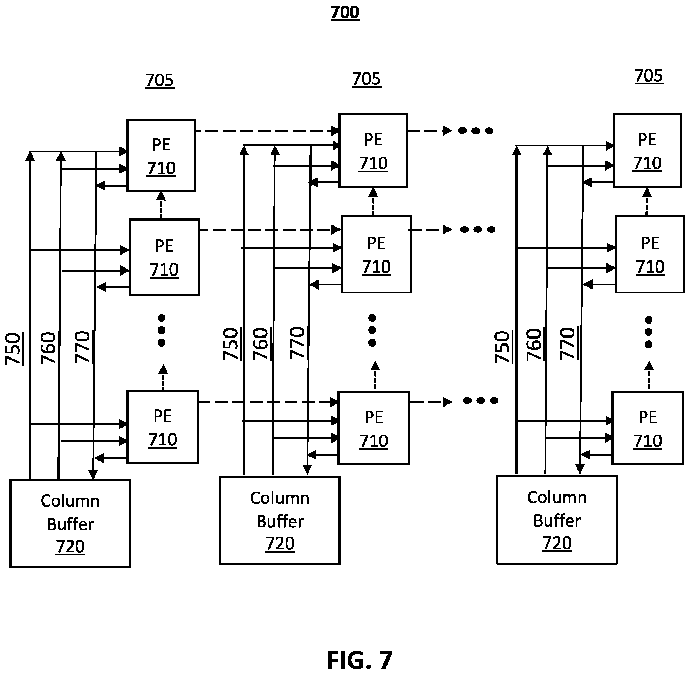

FIG. 7 illustrates an example PE array, in accordance with various embodiments. The PE array 700 includes a plurality of PEs 710 (individually referred to as "PE 710"). The PEs 710 can perform MAC operations, including MAC operations in convolutions, such as convolutions described above. The PEs 710 may also be referred to as neurons in the CNN. Each PE 710 has two input signals 750 and 760 and an output signal 770. The input signal 750 is at least a portion of an IFM to the layer. The input signal 760 is at least a portion of a filter of the layer. In some embodiments, the input signal 750 of a PE 710 includes one or more input operands, and the input signal 760 includes one or more weight operands.

Each PE 710 performs an MAC operation on the input signals 750 and 760 and outputs the output signal 770, which is a result of the MAC operation. Some or all of the input signals 750 and 760 and the output signal 770 may be in an integer format, such as INT8, or floating-point format, such as FP16 or BF16. For the purpose of simplicity and illustration, the input signals and output signal of all the PEs 710 have the same reference numbers, but the PEs 710 may receive different input signals and output different output signals from each other. Also, a PE 710 may be different from another PE 710, e.g., including more, fewer, or different components.

As shown in FIG. 7, the PEs 710 are connected to each other, as indicated by the dash arrows in FIG. 7. The output signal 770 of an PE 710 may be sent to many other PEs 710 (and possibly back to itself) as input signals via the interconnections between PEs 710. In some embodiments, the output signal 770 of an PE 710 may incorporate the output signals of one or more other PEs 710 through an accumulate operation of the PE 710 and generates an internal partial sum of the PE array.

In the embodiments of FIG. 7, the PEs 710 are arranged into columns 705 (individually referred to as "column 705"). The input and weights of the layer may be distributed to the PEs 710 based on the columns 705. Each column 705 has a column buffer 720. The column buffer 720 stores data provided to the PEs 710 in the column 705 for a short amount of time. The column buffer 720 may also store data output by the last PE 710 in the column 705. The output of the last PE 710 may be a sum of the MAC operations of all the PEs 710 in the column 705, which is a column-level internal partial sum of the PE array 700. In other embodiments, input and weights may be distributed to the PEs 710 based on rows in the PE array 700. The PE array 700 may include row buffers in lieu of column buffers 720. A row buffer may store input signals of the PEs in the corresponding row and may also store a row-level internal partial sum of the PE array 700.

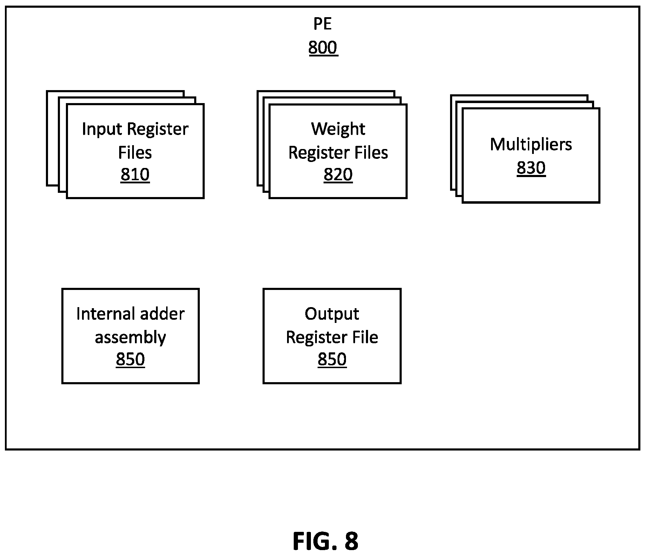

FIG. 8 is a block diagram of a PE 800, in accordance with various embodiments. The PE 800 may be an embodiment of the PE 710 in FIG. 7. The PE 800 may perform MAC operations, e.g., MAC operations using data in integer formats. As shown in FIG. 8, the PE 800 includes input register files 810 (individually referred to as "input register file 810"), weight registers file 820 (individually referred to as "weight register file 820"), multipliers 830 (individually referred to as "multiplier 830"), an internal adder assembly 840, and an output register file 850. In other embodiments, the PE 800 may include fewer, more, or different components. For example, the PE 800 may include multiple output register files 850. As another example, the PE 800 may include a single input register file 810, weight register file 820, or multiplier 830. As yet another example, the PE 800 may include an adder in lieu of the internal adder assembly 840.

The input register files 810 temporarily store input operands for MAC operations by the PE 800. In some embodiments, an input register file 810 may store a single input operand at a time. In other embodiments, an input register file 810 may store multiple input operand or a portion of an input operand at a time. An input operand includes a plurality of input elements (i.e., input elements) in an input tensor. The input elements of an input operand may be stored sequentially in the input register file 810 so the input elements can be processed sequentially. In some embodiments, each input element in the input operand may be from a different input channel of the input tensor. The input operand may include an input element from each of the input channels of the input tensor, and the number of input elements in an input operand may equal the number of the input channels. The input elements in an input operand may have the same (X,Y) coordinates, which may be used as the (X,Y) coordinates of the input operand. For instance, all the input elements of an input operand may be X0Y0, X0Y1, X1Y1, etc.

The weight register file 820 temporarily stores weight operands for MAC operations by the PE 800. The weight operands include weights in the filters of the CNN layer. In some embodiments, the weight register file 820 may store a single weight operand at a time. other embodiments, an input register file 810 may store multiple weight operands or a portion of a weight operand at a time. A weight operand may include a plurality of weights. The weights of a weight operand may be stored sequentially in the weight register file 820 so the weight can be processed sequentially. In some embodiments, for a multiplication operation that involves a weight operand and an input operand, each weight in the weight operand may correspond to an input element of the input operand. The number of weights in the weight operand may equal the number of the input elements in the input operand.

In some embodiments, a weight register file 820 may be the same or similar as an input register file 810, e.g., having the same size, etc. The PE 800 may include a plurality of register files, some of which are designated as the input register files 810 for storing input operands, some of which are designated as the weight register files 820 for storing weight operands, and some of which are designated as the output register file 850 for storing output operands. In other embodiments, register files in the PE 800 may be designated for other purposes, e.g., for storing scale operands used in elementwise add operations, etc.

The multipliers 830 perform multiplication operations on input operands and weight operands. A multiplier 830 may perform a sequence of multiplication operations on a single input operand and a single weight operand and generate a product operand including a sequence of products. Each multiplication operation in the sequence includes multiplying an input element in the input operand and a weight in the weight operand. In some embodiments, a position (or index) of the input element in the input operand matches the position (or index) of the weight in the weight operand. For instance, the first multiplication operation is a multiplication of the first input element in the input operand and the first weight in the weight operand, the second multiplication operation is a multiplication of the second input element in the input operand and the second weight in the weight operand, the third multiplication operation is a multiplication of the third input element in the input operand and the third weight in the weight operand, and so on. The input element and weight in the same multiplication operation may correspond to the same depthwise channel, and their product may also correspond to the same depthwise channel.

Multiple multipliers 830 may perform multiplication operations simultaneously. These multiplication operations may be referred to as a round of multiplication operations. In a round of multiplication operations by the multipliers 830, each of the multipliers 830 may use a different input operand and a different weight operand. The different input operands or weight operands may be stored in different register files of the PE 800. For instance, a first multiplier 830 uses a first input operand (e.g., stored in a first input register file 810) and a first weight operand (e.g., stored in a first weight register file 820), versus a second multiplier 830 uses a second input operand (e.g., stored in a second input register file 810) and a second weight operand (e.g., stored in a second weight register file 820), a third multiplier 830 uses a third input operand (e.g., stored in a third input register file 810) and a third weight operand (e.g., stored in a third weight register file 820), and so on. For an individual multiplier 830, the round of multiplication operations may include a plurality of cycles. A cycle includes a multiplication operation on an input element and a weight.

The multipliers 830 may perform multiple rounds of multiplication operations. A multiplier 830 may use the same weight operand but different input operands in different rounds. For instance, the multiplier 830 performs a sequence of multiplication operations on a first input operand stored in a first input register file in a first round, versus a second input operand stored in a second input register file in a second round. In the second round, a different multiplier 830 may use the first input operand and a different weight operand to perform another sequence of multiplication operations. That way, the first input operand is reused in the second round. The first input operand may be further reused in additional rounds, e.g., by additional multipliers 830.

The internal adder assembly 840 includes one or more adders inside the PE 800, i.e., internal adders. The internal adder assembly 840 may perform accumulation operations on two or more products operands from multipliers 830 and produce an output operand of the PE 800. In some embodiments, the internal adders are arranged in a sequence of tiers. A tier includes one or more internal adders. For the first tier of the internal adder assembly 840, an internal adder may receive product operands from two or more multipliers 830 and generate a sum operand through a sequence of accumulation operations. Each accumulation operation produces a sum of two or more products, each of which is from a different multiplier 830. The sum operand includes a sequence of sums, each of which is a result of an accumulation operation and corresponds to a depthwise channel. For the other tier(s) of the internal adder assembly 840, an internal adder in a tier receives sum operands from the precedent tier in the sequence. Each of these numbers may be generated by a different internal adder in the precedent tier. A ratio of the number of internal adders in a tier to the number of internal adders in a subsequent tier may be 2:1. In some embodiments, the last tier of the internal adder assembly 840 may include a single internal adder, which produces the output operand of the PE 800.

The output register file 850 stores output operands of the PE 800. In some embodiments, the output register file 850 may store an output operand at a time. In other embodiments, the output register file 850 may store multiple output operands or a portion of an output operand at a time. An output operand includes a plurality of output elements in an IFM. The output elements of an output operand may be stored sequentially in the output register file 850 so the output elements can be processed sequentially. In some embodiments, each output element in the output operand corresponds to a different depthwise channel and is an element of a different output channel of the output channel of the depthwise convolution. The number of output elements in an output operand may equal the number of the depthwise channels of the depthwise convolution.

### Example Method of Performing Low Latency Inference

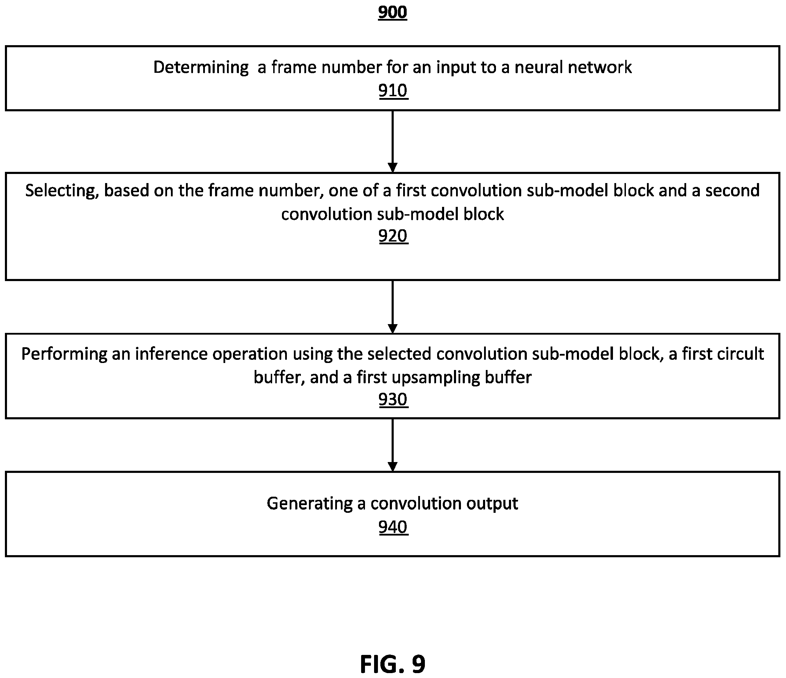

FIG. 9 is a flowchart showing a method 900 of performing low latency inference, in accordance with various embodiments. The method 900 may be performed by the CNN module of FIGS. 3, 4, 5A-5D, and/or FIGS. 6A-6E. Although the method 900 is described with reference to the flowchart illustrated in FIG. 9, many other methods for low latency inference may alternatively be used. For example, the order of execution of the steps in FIG. 9 may be changed. As another example, some of the steps may be changed, eliminated, or combined.

In various examples, the method 900 is a method for low latency deep learning operations. At step 910, the frame number of an input to the CNN is determined. The neural network includes a first convolution sub-model block having depth of one and comprising a single convolution layer, and a second convolution sub-model block having a depth of two and comprising a first convolution layer and a second convolution layer. The neural network also includes a first circular buffer, a second circular buffer, and a first upsampling buffer. Examples of neural networks are shown in FIGS. 6A-6E and described above.

At step 920, one of the first convolution sub-model block and the second convolution sub-model block is selected, based on the frame number. For example, as discussed above with respect to Table 1, the depth of the convolutions varies depending on the frame number. At step 930, an inference operation is performed using the selected convolution sub-model block, the first circular buffer, and the first upsampling buffer. At step 940, a convolution output is generated based on the inference operation at step 930.

### Example Computing Device

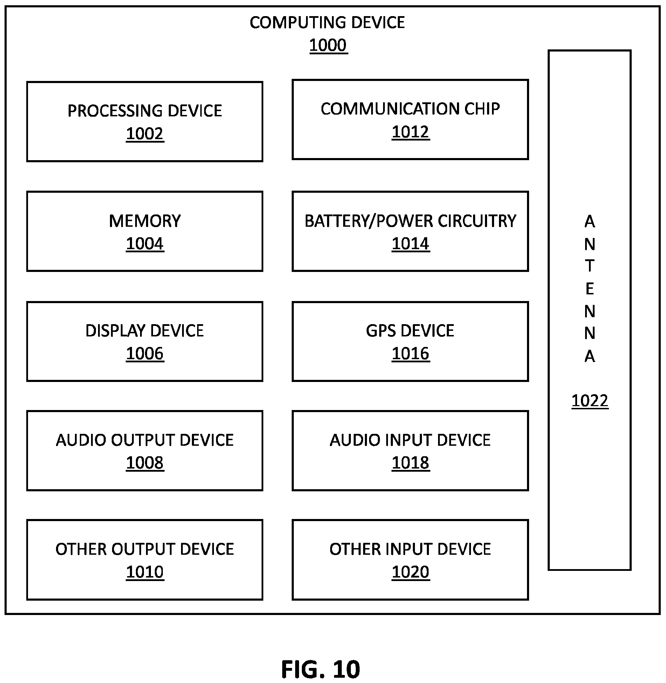

FIG. 10 is a block diagram of an example computing device 1000, in accordance with various embodiments. In some embodiments, the computing device 1000 can be used as at least part of the CNN system 200. A number of components are illustrated in FIG. 10 as included in the computing device 1000, but any one or more of these components may be omitted or duplicated, as suitable for the application. In some embodiments, some or all of the components included in the computing device 1000 may be attached to one or more motherboards. In some embodiments, some or all of these components are fabricated onto a single system on a chip (SoC) die. Additionally, in various embodiments, the computing device 1000 may not include one or more of the components illustrated in FIG. 10, but the computing device 1000 may include interface circuitry for coupling to the one or more components. For example, the computing device 1000 may not include a display device 1006, but may include display device interface circuitry (e.g., a connector and driver circuitry) to which a display device 1006 may be coupled. In another set of examples, the computing device 1000 may not include an audio input device 1018 or an audio output device 1008, but may include audio input or output device interface circuitry (e.g., connectors and supporting circuitry) to which an audio input device 1018 or audio output device 1008 may be coupled.

The computing device 1000 may include a processing device 1002 (e.g., one or more processing devices). The processing device 1002 processes electronic data from registers and/or memory to transform that electronic data into other electronic data that may be stored in registers and/or memory. The computing device 1000 may include a memory 1004, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 1004 may include memory that shares a die with the processing device 1002. In some embodiments, the memory 1004 includes one or more non-transitory computer-readable media storing instructions executable to perform deep learning operations, e.g., the methods described above in conjunction with FIGS. 5B-5D, 6A-6E, or FIG. 9. The instructions stored in the one or more non-transitory computer-readable media may be executed by the processing device 1002.

In some embodiments, the computing device 1000 may include a communication chip 1012 (e.g., one or more communication chips). For example, the communication chip 1012 may be configured for managing wireless communications for the transfer of data to and from the computing device 1000. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 1012 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 1012 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 1012 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 1012 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 1012 may operate in accordance with other wireless protocols in other embodiments. The computing device 1000 may include an antenna 1022 to facilitate wireless communications and/or to receive other wireless communications (such as AM or FM radio transmissions).

In some embodiments, the communication chip 1012 may manage wired communications, such as electrical, optical, or any other suitable communication protocols (e.g., the Ethernet). As noted above, the communication chip 1012 may include multiple communication chips. For instance, a first communication chip 1012 may be dedicated to shorter-range wireless communications such as Wi-Fi or Bluetooth, and a second communication chip 1012 may be dedicated to longer-range wireless communications such as global positioning system (GPS), EDGE, GPRS, CDMA, WiMAX, LTE, EV-DO, or others. In some embodiments, a first communication chip 1012 may be dedicated to wireless communications, and a second communication chip 1012 may be dedicated to wired communications.

The computing device 1000 may include battery/power circuitry 1014. The battery/power circuitry 1014 may include one or more energy storage devices (e.g., batteries or capacitors) and/or circuitry for coupling components of the computing device 1000 to an energy source separate from the computing device 1000 (e.g., AC line power).

The computing device 1000 may include a display device 1006 (or corresponding interface circuitry, as discussed above). The display device 1006 may include any visual indicators, such as a heads-up display, a computer monitor, a projector, a touchscreen display, a liquid crystal display (LCD), a light-emitting diode display, or a flat panel display, for example.

The computing device 1000 may include an audio output device 1008 (or corresponding interface circuitry, as discussed above). The audio output device 1008 may include any device that generates an audible indicator, such as speakers, headsets, or earbuds, for example.

The computing device 1000 may include an audio input device 1018 (or corresponding interface circuitry, as discussed above). The audio input device 1018 may include any device that generates a signal representative of a sound, such as microphones, microphone arrays, or digital instruments (e.g., instruments having a musical instrument digital interface (MIDI) output).

The computing device 1000 may include a GPS device 1016 (or corresponding interface circuitry, as discussed above). The GPS device 1016 may be in communication with a satellite-based system and may receive a location of the computing device 1000, as known in the art.

The computing device 1000 may include another output device 1010 (or corresponding interface circuitry, as discussed above). Examples of the other output device 1010 may include an audio codec, a video codec, a printer, a wired or wireless transmitter for providing information to other devices, or an additional storage device.

The computing device 1000 may include another input device 1020 (or corresponding interface circuitry, as discussed above). Examples of the other input device 1020 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1000 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 1000 may be any other electronic device that processes data.

### Selected Examples

The following paragraphs provide various examples of the embodiments disclosed herein.

Example 1 provides a method for performing an inference operation, the method comprising: determining a frame number for an input tensor to a neural network, wherein the neural network includes includes a plurality of convolution sub-model blocks having different depths, a depth of a respective convolution sub-model block indicating a number of convolution layers in the respective convolution sub-model block; selecting, based on the frame number, a convolution sub-model block from the plurality of convolution sub-model blocks, the selected convolution sub-model block comprising a first convolution layer and a second convolution layer; and performing the inference operation using the selected convolution sub-model block by: performing a first convolution operation in the first convolution layer with data from a first buffer, writing data generated by the first convolution operation to a second buffer, performing a second convolution operation in the second convolution layer with data from the second buffer, and writing output from the second convolution layer into a third buffer.

Example 2 provides a method, system, and/or apparatus according to any of the preceding or following examples, wherein performing the inference operation includes adding the data generated by the first convolution operation to data generated by the second convolution operation and to previous data in the third buffer to generate upsampled convolution data.

Example 3 provides a method, system, and/or apparatus according to any of the preceding or following examples, further comprising performing pointwise convolution on the input tensor to generate an expanded-height input tensor and concatenating the expanded-height input tensor to the data from the first buffer to generate first concatenated data.

Example 4 provides a method, system, and/or apparatus according to any of the preceding or following examples, wherein performing the first convolution operation includes performing the first convolution operation on the first concatenated data to generate first convolution operation data.

Example 5 provides a method, system, and/or apparatus according to any of the preceding or following examples, further comprising concatenating the first convolution operation data to data from the second buffer to generate second concatenated data, and wherein performing the second convolution operation includes performing the second convolution operation on the second concatenated data.

Example 6 provides a method, system, and/or apparatus according to any of the preceding or following examples, further comprising adding the upsampled convolution data to the expanded-height input tensor and performing a second pointwise convolution to generate a decreased-height output tensor.

Example 7 provides a method, system, and/or apparatus according to any of the preceding or following examples, wherein selecting based on the frame number includes referencing a table indicating the selected convolution sub-model block for each frame number.

Example 8 provides one or more non-transitory computer-readable media storing instructions executable to perform operations, the operations comprising: determining a frame number for an input tensor to a neural network, wherein the neural network includes includes a plurality of convolution sub-model blocks having different depths, a depth of a respective convolution sub-model block indicating a number of convolution layers in the respective convolution sub-model block; selecting, based on the frame number, a convolution sub-model block from the plurality of convolution sub-model blocks, the selected convolution sub-model block comprising a first convolution layer and a second convolution layer; and performing the inference operation using the selected convolution sub-model block by: performing a first convolution operation in the first convolution layer with data from a first buffer, writing data generated by the first convolution operation to a second buffer, performing a second convolution operation in the second convolution layer with data from the second buffer, and writing output from the second convolution layer into a third buffer.

Example 9 provides a method, system, and/or apparatus according to any of the preceding or following examples, wherein performing the inference operation includes adding the data generated by the first convolution operation to data generated by the second convolution operation and to previous data in the third buffer to generate upsampled convolution data.

Example 10 provides a method, system, and/or apparatus according to any of the preceding or following examples, wherein the operations further comprise performing pointwise convolution on the input tensor to generate an expanded-height input tensor and concatenating the expanded-height input tensor to the data from the first buffer to generate first concatenated data.

Example 11 provides a method, system, and/or apparatus according to any of the preceding or following examples, wherein performing the first convolution operation includes performing the first convolution operation on the first concatenated data to generate first convolution operation data.

Example 12 provides a method, system, and/or apparatus according to any of the preceding or following examples, wherein the operations further comprise concatenating the first convolution operation data to data from the second buffer to generate second concatenated data, and wherein performing the second convolution operation includes performing the second convolution operation on the second concatenated data.

Example 13 provides a method, system, and/or apparatus according to any of the preceding or following examples, wherein the operations further comprise adding the upsampled convolution data to the expanded-height input tensor and performing a second pointwise convolution to generate a decreased-height output tensor.

Example 14 provides a method, system, and/or apparatus according to any of the preceding or following examples, wherein selecting based on the frame number includes referencing a table indicating the selected convolution sub-model block for each frame number.

Example 15 provides an apparatus, comprising: a computer processor for executing computer program instructions; and a non-transitory computer-readable memory storing computer program instructions executable by the computer processor to perform operations comprising: determining a frame number for an input tensor to a neural network, wherein the neural network includes includes a plurality of convolution sub-model blocks having different depths, a depth of a respective convolution sub-model block indicating a number of convolution layers in the respective convolution sub-model block; selecting, based on the frame number, a convolution sub-model block from the plurality of convolution sub-model blocks, the selected convolution sub-model block comprising a first convolution layer and a second convolution layer; and performing the inference operation using the selected convolution sub-model block by: performing a first convolution operation in the first convolution layer with data from a first buffer, writing data generated by the first convolution operation to a second buffer, performing a second convolution operation in the second convolution layer with data from the second buffer, and writing output from the second convolution layer into a third buffer.

Example 16 provides a method, system, and/or apparatus according to any of the preceding or following examples, wherein performing the inference operation includes adding the data generated by the first convolution operation to data generated by the second convolution operation and to previous data in the third buffer to generate upsampled convolution data.

Example 17 provides a method, system, and/or apparatus according to any of the preceding or following examples, wherein the operations further comprise performing pointwise convolution on the input tensor to generate an expanded-height input tensor and concatenating the expanded-height input tensor to the data from the first buffer to generate first concatenated data.

Example 18 provides a method, system, and/or apparatus according to any of the preceding or following examples, wherein performing the first convolution operation includes performing the first convolution operation on the first concatenated data to generate first convolution operation data.

Example 19 provides a method, system, and/or apparatus according to any of the preceding or following examples, wherein the operations further comprise concatenating the first convolution operation data to data from the second buffer to generate second concatenated data, and wherein performing the second convolution operation includes performing the second convolution operation on the second concatenated data.

Example 20 provides a method, system, and/or apparatus according to any of the preceding or following examples, wherein selecting based on the frame number includes referencing a table indicating the selected convolution sub-model block for each frame number.

Example 21 provides a method for low latency deep learning operations, the method comprising: determining a frame number for an input to a neural network, wherein the neural network includes: a first convolution sub-model block having depth of one and comprising a single convolution layer, a second convolution sub-model block having a depth of two and comprising a first convolution layer and a second convolution layer, and a first circular buffer, a second circular buffer, and a first upsampling buffer; selecting, based on the frame number, one of the first convolution sub-model block and the second convolution sub-model block; and performing an inference operation using the selected convolution sub-model block, the first circular buffer, and the first upsampling buffer to generate a convolution output.

Example 22 provides a method, system, and/or apparatus according to any of the preceding or following examples, wherein performing the inference operation using the second convolution sub-model block includes: utilizing data from the first circular buffer for a first convolution operation at the first convolution layer, storing data from a second convolution operation at the second convolution layer in the second circular buffer, and utilizing output from the second convolution layer to update the first upsampling buffer.

Example 23 provides a method, system, and/or apparatus according to any of the preceding or following examples, wherein performing the inference operation includes upsampling the data from the second convolution operation using data from a second upsampling buffer to generate upsampled second convolution data.

Example 24 provides a method, system, and/or apparatus according to any of the preceding or following examples, wherein performing the inference operation includes upsampling the data from the first convolution operation using the upsampled second convolution data and data from the first upsampling buffer.

Example 25 provides a method, system, and/or apparatus according to any of the preceding or following examples, wherein performing the inference operation using the first convolution sub-model block includes: utilizing data from the first circular buffer for a first convolution operation at the first convolution layer to generate first convolution output, and upsampling the first convolution output using data from the first upsampling buffer.

Example 26 provides a method, system, and/or apparatus according to any of the preceding or following examples, wherein selecting based on the frame number includes referencing a table indicating the selected convolution sub-model block for each frame number.

Example 27 provides a method, system, and/or apparatus according to any of the preceding or following examples, wherein the neural network includes a third convolution sub-model block having depth of three and comprising three convolution layers, a third circular buffer, and a second upsampling buffer, and wherein selecting includes selecting, based on the frame number, one of the first convolution sub-model block, the second convolution sub-model block, and the third convolution sub-model block.

Example 28 provides one or more non-transitory computer-readable media storing instructions executable to perform operations, the operations comprising: determining a frame number for an input tensor to a neural network, wherein the neural network includes: a first convolution sub-model block having depth of one and comprising a single convolution layer, a second convolution sub-model block having a depth of two and comprising a first convolution layer and a second convolution layer, and a first circular buffer, a second circular buffer, and a first upsampling buffer; selecting, based on the frame number, one of the first convolution sub-model block and the second convolution sub-model block; and performing an inference operation using the selected convolution sub-model block, the first circular buffer, and the first upsampling buffer to generate a convolution output.

Example 29 provides a method, a non-transitory computer-readable media, a system, and/or an apparatus according to any of the preceding or following examples, wherein performing the inference operation using the second convolution sub-model block includes: utilizing data from the first circular buffer for a first convolution operation at the first convolution layer, storing data from a second convolution operation at the second convolution layer in the second circular buffer, and utilizing output from the second convolution layer to update the first upsampling buffer.

Example 30 provides a method, a non-transitory computer-readable media, a system, and/or an apparatus according to any of the preceding or following examples, wherein performing the inference operation includes upsampling the data from the second convolution operation using data from a second upsampling buffer to generate upsampled second convolution data.

Example 31 provides a method, a non-transitory computer-readable media, a system, and/or an apparatus according to any of the preceding or following examples, wherein performing the inference operation includes upsampling the data from the first convolution operation using the upsampled second convolution data and data from the first upsampling buffer.

Example 32 provides a method, a non-transitory computer-readable media, a system, and/or an apparatus according to any of the preceding or following examples, wherein performing the inference operation using the first convolution sub-model block includes: utilizing data from the first circular buffer for a first convolution operation at the first convolution layer to generate first convolution output, and upsampling the first convolution output using data from the first upsampling buffer.

Example 33 provides a method, a non-transitory computer-readable media, a system, and/or an apparatus according to any of the preceding or following examples, wherein selecting based on the frame number includes referencing a table indicating the selected convolution sub-model block for each frame number.

Example 34 provides a method, a non-transitory computer-readable media, a system, and/or an apparatus according to any of the preceding or following examples, wherein the neural network includes a third convolution sub-model block having depth of three and comprising three convolution layers, a third circular buffer, and a second upsampling buffer, and wherein selecting includes selecting, based on the frame number, one of the first convolution sub-model block, the second convolution sub-model block, and the third convolution sub-model block.

Example 35 provides an apparatus, comprising: a computer processor for executing computer program instructions; and a non-transitory computer-readable memory storing computer program instructions executable by the computer processor to perform operations comprising: determining a frame number for an input tensor to a neural network, wherein the neural network includes: a first convolution sub-model block having depth of one and comprising a single convolution layer, a second convolution sub-model block having a depth of two and comprising a first convolution layer and a second convolution layer, and a first circular buffer, a second circular buffer, and a first upsampling buffer; selecting, based on the frame number, one of the first convolution sub-model block and the second convolution sub-model block; and performing an inference operation using the selected convolution sub-model block, the first circular buffer, and the first upsampling buffer to generate a convolution output.

Example 36 provides a method, a non-transitory computer-readable media, a system, and/or an apparatus according to any of the preceding or following examples, wherein performing the inference operation using the second convolution sub-model block includes: utilizing data from the first circular buffer for a first convolution operation at the first convolution layer, storing data from a second convolution operation at the second convolution layer in the second circular buffer, and utilizing output from the second convolution layer to update the first upsampling buffer.

Example 37 provides a method, a non-transitory computer-readable media, a system, and/or an apparatus according to any of the preceding or following examples, wherein performing the inference operation includes upsampling the data from the second convolution operation using data from a second upsampling buffer to generate upsampled second convolution data.

Example 38 provides a method, a non-transitory computer-readable media, a system, and/or an apparatus according to any of the preceding or following examples, wherein performing the inference operation includes upsampling the data from the first convolution operation using the upsampled second convolution data and data from the first upsampling buffer.

Example 39 provides a method, a non-transitory computer-readable media, a system, and/or an apparatus according to any of the preceding or following examples, wherein performing the inference operation using the first convolution sub-model block includes: utilizing data from the first circular buffer for a first convolution operation at the first convolution layer to generate first convolution output, and upsampling the first convolution output using data from the first upsampling buffer.

Example 40 provides a method, a non-transitory computer-readable media, a system, and/or an apparatus according to any of the preceding or following examples, wherein selecting based on the frame number includes referencing a table indicating the selected convolution sub-model block for each frame number.

Example 41 provides a method for low latency deep learning operations, the method comprising: determining a frame number for an input to a neural network, wherein the neural network includes a convolution model block having a plurality of convolution layers and having a conditional depth operation that determines how many convolution layers are performed on a selected frame, a plurality of circular buffers, and a first upsampling buffer; determining, based on the frame number, a depth of a convolution operation; and performing an inference operation using the convolution model block to the determined depth to generate a convolution output.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A method comprising:
determining a frame number for an input tensor to a neural network, wherein the neural network includes a plurality of convolution sub-model blocks having different depths, a depth of a respective convolution sub-model block indicating a number of convolution layers in the respective convolution sub-model block;
selecting, based on the frame number, a convolution sub-model block from the plurality of convolution sub-model blocks, the selected convolution sub-model block comprising a first convolution layer and a second convolution layer; and
performing the inference operation using the selected convolution sub-model block by:
performing a first convolution operation in the first convolution layer with data from a first buffer,
writing data generated by the first convolution operation to a second buffer,
performing a second convolution operation in the second convolution layer with data from the second buffer, and
writing output from the second convolution layer into a third buffer.

2. The method according to claim 1, wherein performing the inference operation includes adding the data generated by the first convolution operation to data generated by the second convolution operation and to previous data in the third buffer to generate upsampled convolution data.

3. The method according to claims 1-2, further comprising performing pointwise convolution on the input tensor to generate an expanded-height input tensor and concatenating the expanded-height input tensor to the data from the first buffer to generate first concatenated data.

4. The method according to claim 3, wherein performing the first convolution operation includes performing the first convolution operation on the first concatenated data to generate first convolution operation data.

5. The method according to claim 4, further comprising concatenating the first convolution operation data to data from the second buffer to generate second concatenated data, and wherein performing the second convolution operation includes performing the second convolution operation on the second concatenated data.

6. The method according to claim 3, further comprising adding the upsampled convolution data to the expanded-height input tensor and performing a second pointwise convolution to generate a decreased-height output tensor.

7. The method according to claims 1-6, wherein selecting based on the frame number includes referencing a table indicating the selected convolution sub-model block for each frame number.

8. One or more non-transitory computer-readable media storing instructions executable to perform operations, the operations comprising:
determining a frame number for an input tensor to a neural network, wherein the neural network includes a plurality of convolution sub-model blocks having different depths, a depth of a respective convolution sub-model block indicating a number of convolution layers in the respective convolution sub-model block;
selecting, based on the frame number, a convolution sub-model block from the plurality of convolution sub-model blocks, the selected convolution sub-model block comprising a first convolution layer and a second convolution layer; and
performing the inference operation using the selected convolution sub-model block by:
performing a first convolution operation in the first convolution layer with data from a first buffer,
writing data generated by the first convolution operation to a second buffer,
performing a second convolution operation in the second convolution layer with data from the second buffer, and
writing output from the second convolution layer into a third buffer.

9. The one or more non-transitory computer-readable media according to claim 8, wherein performing the inference operation includes adding the data generated by the first convolution operation to data generated by the second convolution operation and to previous data in the third buffer to generate upsampled convolution data.

10. The one or more non-transitory computer-readable media according to claims 8-9, wherein the operations further comprise performing pointwise convolution on the input tensor to generate an expanded-height input tensor and concatenating the expanded-height input tensor to the data from the first buffer to generate first concatenated data.

11. An apparatus, comprising:
a computer processor for executing computer program instructions; and
a non-transitory computer-readable memory storing computer program instructions executable by the computer processor to perform operations comprising:
determining a frame number for an input tensor to a neural network, wherein the neural network includes a plurality of convolution sub-model blocks having different depths, a depth of a respective convolution sub-model block indicating a number of convolution layers in the respective convolution sub-model block;
selecting, based on the frame number, a convolution sub-model block from the plurality of convolution sub-model blocks, the selected convolution sub-model block comprising a first convolution layer and a second convolution layer; and
performing the inference operation using the selected convolution sub-model block by:
performing a first convolution operation in the first convolution layer with data from a first buffer,
writing data generated by the first convolution operation to a second buffer,
performing a second convolution operation in the second convolution layer with data from the second buffer, and
writing output from the second convolution layer into a third buffer.

12. The apparatus of claim 11, wherein performing the inference operation includes adding the data generated by the first convolution operation to data generated by the second convolution operation and to previous data in the third buffer to generate upsampled convolution data.

13. The apparatus of claim 11-12, wherein the operations further comprise performing pointwise convolution on the input tensor to generate an expanded-height input tensor and concatenating the expanded-height input tensor to the data from the first buffer to generate first concatenated data.

14. The apparatus of claim 13, wherein performing the first convolution operation includes performing the first convolution operation on the first concatenated data to generate first convolution operation data.

15. The apparatus of claim 11-14, wherein selecting based on the frame number includes referencing a table indicating the selected convolution sub-model block for each frame number.
